# EUROPEAN PATENT APPLICATION

(11) **EP 2 680 587 A1**
(43) Date of publication of application: **01.01.2014**
(21) Application number: 12750072.6
(22) Date of filing: 24.02.2012
(51) Int. Cl.: H04N 7/32

(54) **VIDEO ENCODING DEVICE AND VIDEO DECODING DEVICE**

(30) Priority: 25.02.2011 JP 2011040630
(71) Applicant: Panasonic Corporation, Osaka 571-8501 (JP)
(72) Inventor: KADONO, Shinya, Chuo-ku Osaka 540-6207 (JP); WATANABE, Toshiaki, Chuo-ku Osaka 540-6207 (JP)
(74) Representative: Grünecker, Kinkeldey, Stockmair & Schwanhäusser
(86) International application number: PCT/JP2012/001300
(87) International publication number: WO 2012/114774

(57) **Abstract**

A moving picture coding apparatus includes: a coding unit (105) which codes pictures with reference to decoded pictures of previously coded pictures to generate coded data of the pictures; a transmission unit (106) which transmits the coded data to a moving picture decoding apparatus; and a control unit (108). When an acknowledgement signal indicating successful receiving of coded data of all of a predetermined number of consecutive pictures is received from a receiver apparatus, the control unit stores, as a key picture in a memory (101), a decoded picture of a current picture being coded when the acknowledgement signal is received. When a negative-acknowledgement signal indicating unsuccessful receiving of coded data of any of the consecutive pictures is received, the control unit causes the coding unit to code the current picture with reference to a key picture stored in the memory.

## Description

### [Technical Field]

The present invention relates to a moving picture coding apparatus and a moving picture decoding apparatus for coding moving picture data according to, for example, an MPEG-4 standard of the Moving Picture Experts Group or the ITU-T H.264 standard.

### [Background Art]

In recent years, high-speed networks using ADSL or optical fibers have spread so that data communication at bit rates over dozens megabit per second is available to ordinary households. Based on this, it is expected that use of image coding techniques including MPEG-1, MPEG-2, MPEG-4, and MPEG-4 AVC/H.264 will promote introduction of videophone systems and video conference systems of TV or HDTV broadcast quality to such ordinary households as well as enterprises using dedicated lines.

It should be noted that coded moving picture data, that is, a stream may be partially lost in transmission through a network due to network congestion and so on. A receiver of such a stream partially lost is unable to decode the part corresponding to the lost part correctly so that a resulting video has low image quality.

Furthermore, decoding a video on a frame-by-frame basis cannot be always successful in decoding of a pixel. Here is an example for MPEG-1, MPEG-2, MPEG-4, and MPEG-4 AVC/H.264. When a picture subsequent to a loss in a stream is decoded and the whole of the picture to be decoded is intra-coded, that is, the picture to be decoded is an I-picture, the pixels in the picture can be correctly decoded only from a stream of intra-coded slices. When a picture subsequent to a loss in a stream is decoded and the picture to be decoded is inter-coded, that is, the picture to be decoded is a P-picture, the pixels in the picture cannot be correctly decoded because the picture is decoded using a correlation with (or with reference to) a picture most recently decoded, which is the picture having low image quality due to the loss in the stream.

This is a problem that a loss in a stream causes incorrect decoding of a picture subsequent to a loss in a stream when the picture to be decoded is an inter-coded picture, and therefore recursively makes it impossible to correctly decode subsequent pictures.

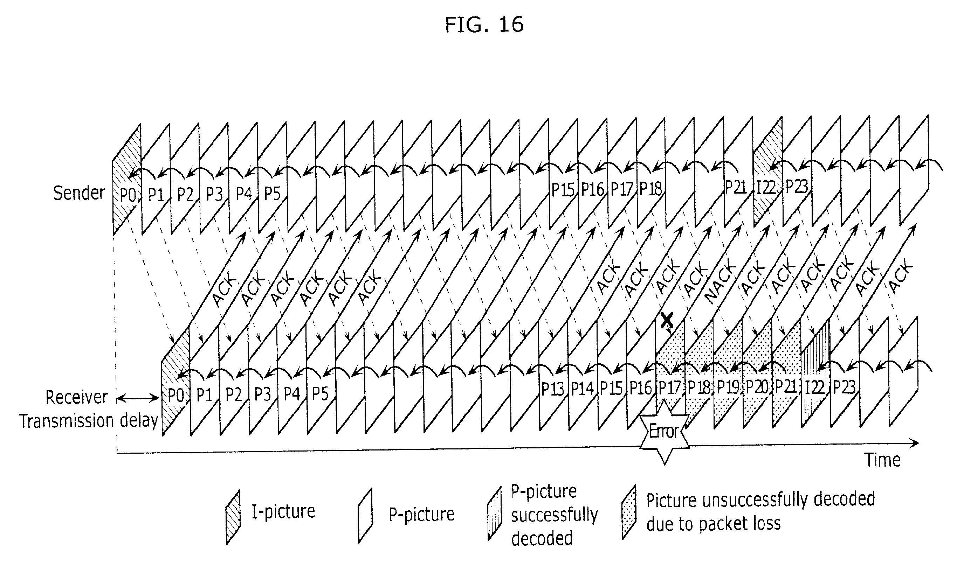

There are some known techniques for preventing incorrect decoding of a picture from causing incorrect decoding of pixels in subsequent pictures. Examples of such techniques are shown in FIG. 16, FIG. 17, and FIG. 18.

FIG. 16 illustrates a conventional moving picture coding method using an ACK and a NACK and intra-coding. A sender generates a compressed stream by coding moving picture data on a frame-by-frame basis. The sender sends out a stream to a receiver, and the receiver decodes the stream. Then, a moving picture is reconstructed by the receiver so that the reconstructed video can be reproduced.

The initial picture in the video is coded as an I-picture, and each subsequent picture is coded as a P-picture with reference to a picture coded immediately before the picture (the curved arrows pointing to the left indicate pictures to be referred to in coding of the pictures). The abscissa in FIG. 16 represents the time course; from left to right, old to new. P0, P1, P2, and P3 represent picture numbers zeroth, first, second, and third, respectively. The arrows extending from the pictures of the sender to the pictures of the receiver represent correspondences between pictures of the sender and pictures of the receiver. The arrows tilt to the right indicating elapse of time in transmission of a stream (a transmission path delay between the sender and the receiver) by the amount indicated by the shift amount to the right. The cross mark indicates occurrence of a packet loss due to communication error.

The receiver sends the sender an ACK when a picture received is correctly decoded. For example, the receiver sends the sender an ACK for each of the picture P0, picture P1, and picture P2 when the picture is successfully received. The sender receives an ACK and is thereby notified that the receiver has correctly decoded the picture corresponding to each picture number.

When the receiver is unable to correctly decode a picture P17 because of an error in a transmission path, the receiver fails to correctly decode not only the picture P17 but also pictures P18, P19, P20, and P21, which are to be sequentially decoded with reference to the picture P17. Being unable to correctly decode the picture P17, the receiver sends the sender not an ACK but a NACK.

The sender receives the NACK and is thereby notified that the receiver is unable to correctly decode the picture (P17). In response, the sender codes a picture P22, coding of which is not completed yet immediately after the receiving of the NACK, not as a P-picture (using inter-prediction) but as an I-picture (using intra-prediction) to be transmitted.

The receiver receives a picture 122 which is an I-picture and decodes the picture 122. This stops error propagation due to reference to the incorrectly decoded picture so that a picture P23 and subsequent P-pictures can be correctly decoded.

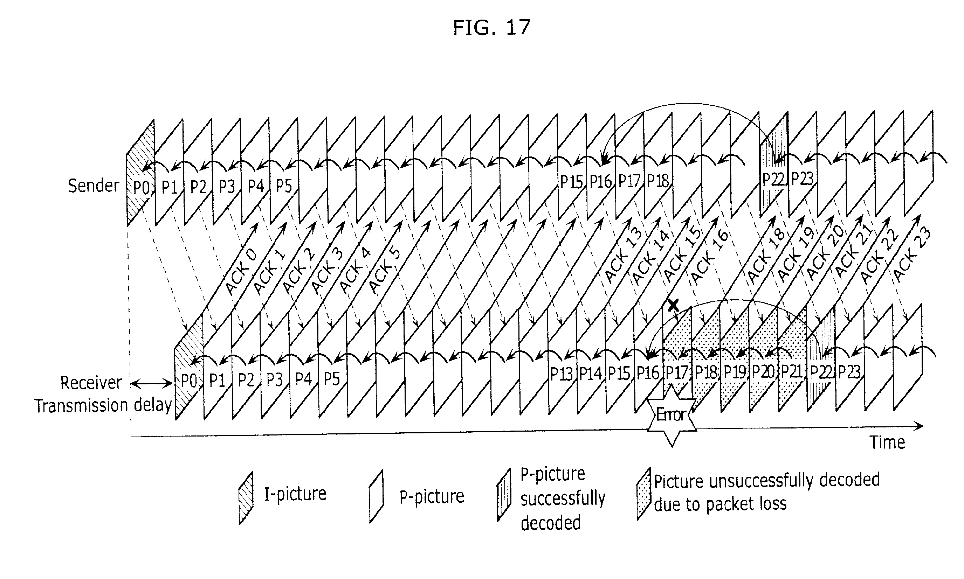

FIG. 17 illustrates a conventional moving picture coding method using ACKs and inter-coding. This is a modification of the method illustrated in FIG. 16. The receiver sends the sender an ACK to which a number identifying a correctly decoded picture is attached when a picture received is correctly decoded. For example, the receiver sends the sender an ACK 0, an ACK 1, and an ACK 2 for the picture P0, picture P1, and picture P2, respectively when the picture is successfully received.

The sender receives an ACK and is thereby notified that the receiver has correctly decoded the picture corresponding to each picture number.

When the receiver is unable to correctly decode a picture P17 because of an error in a transmission path, the receiver fails to correctly decode not only the picture P17 but also pictures P18, P19, P20, and P21, which are to be sequentially decoded with reference to the picture P17. Being unable to correctly decode the picture P17, the receiver sends the sender no ACK.

The sender receives no ACK corresponding to the picture P17 and is thereby notified that the receiver is unable to correctly decode the picture. On the other hand, by receiving an ACK 16, the sender is notified that the picture P16 has been correctly decoded. In response, the sender codes a picture P22 not as an I-picture but as a P-picture with reference to the picture P16, and then transmits the coded picture P22.

The receiver receives the P-picture coded picture P22 coded with reference to the picture 16 correctly decoded, and decodes the picture P22. This stops error propagation due to reference to the incorrectly decoded picture so that a picture P23 and subsequent P-pictures can be correctly decoded.

In the moving picture coding method illustrated in FIG. 17, error propagation is stopped using not an I-picture, which is coded with low compression efficiency, but a P-picture, which is coded with high compression efficiency, so that streams to be sent out can be generated at compression efficiency higher than in the method illustrated in FIG. 16. In the method illustrated in FIG. 17, the receiver may use a NACK to notify the sender of incorrect decoding instead of sending no ACK.

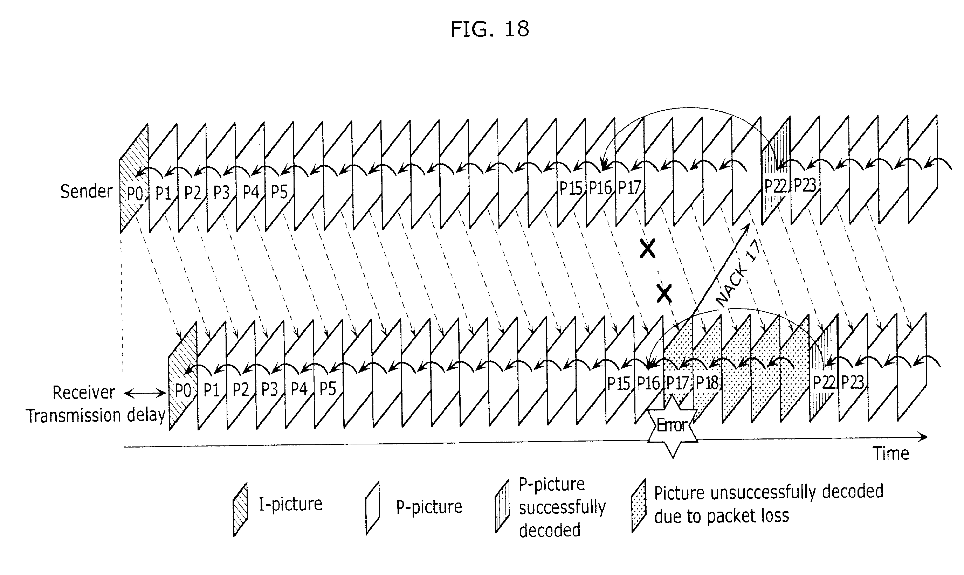

FIG. 18 illustrates a conventional moving picture coding method using NACK and inter-coding. In the method illustrated in FIG. 18, the receiver sends the sender not an ACK but a NACK when the receiver is unable to correctly decode a picture received. A number identifying the picture which cannot be correctly decoded is attached to the NACK. For example, the receiver sends the sender a NACK 17 when the receiver is unable to successfully receive a picture P17.

The sender receives the NACK corresponding to the picture P17 and is thereby notified that the receiver is unable to correctly decode the picture. In response, the sender codes a picture P22 as a P-picture with reference to a picture P16 which is the most recent one of the pictures for which no NACK is received, and then sends the coded picture P22. As with the method illustrated in FIG. 17, error propagation is stopped using not an I-picture, which is coded with low compression efficiency, but a P-picture, which is coded with high compression efficiency, so that streams to be sent out can be generated at compression efficiency higher than in the method illustrated in FIG. 16 (see Patent Literature 1).

### [Citation List]

### [Patent Literature]

[PTL 1] Japanese Patent No. 3068002

### [Summary of Invention]

### [Technical Problem]

The moving picture coding methods illustrated in FIG. 17 and FIG. 18 require a large capacity of memory to store a reference picture which is referred to when an ACK or a NACK is received. Referring to FIG. 17 as an example, the sender needs to store the picture P16 in memory in order to make the picture 22 usable as a reference picture. Specifically, the sender in this example needs to store in memory all pictures for which ACKs have not been received, that is, six pictures of the pictures P16, P17, P18, P19, P20, and P21. This is because an ACK or a NACK is received for each picture and the picture corresponding to the ACK most recently received is used as a reference picture when an NACK is received. The number of pictures to be stored in the memory increases in proportion to the amount of a transmission delay, and therefore memory of a larger capacity is required to store pictures when a transmission delay is longer.

At the same time, the receiver needs to store in memory reference pictures which may be referred to when the sender receives a NACK. The receiver therefore needs to have memory of a capacity large enough to store six pictures of P16, P17, P18, P19, P20, and P21, which is as large as that of the sender.

Furthermore, in the case where an ACK is returned for each picture as illustrated in FIG. 17, ACK transmission is performed so frequently that in low bit-rate communication, the bit rate for the ACK transmission is too high to be ignored with respect to the bit rate for moving picture data transmission and reception. In other words, there is a problem that the bit rate for moving picture data transmission and reception needs to be reduced by an equivalent of the bit rate for the ACK transmission and reception.

The present invention, conceived to address the problem, has an object of providing a mechanism with which error propagation can be stopped using a P-picture (inter prediction) with little increase in the capacity of memory required to store reference pictures so that streams of high compression efficiency can be transmitted using memory of a small capacity.

### [Solution to Problem]

In order to solve the problem, a moving picture coding apparatus according to an aspect of the present invention includes: a coding unit configured to code pictures with reference to decoded pictures of previously coded pictures to generate coded data of the pictures; a memory having areas for storing the decoded pictures of the previously coded pictures; a transmission unit configured to transmit the generated coded data to a moving picture decoding apparatus; an acquisition unit configured to receive either an acknowledgement signal or a negative-acknowledgement signal from the moving picture decoding apparatus, the acknowledgement signal indicating that the moving picture decoding apparatus has successfully received the coded data of all of a predetermined number of consecutive pictures among the pictures, and the negative-acknowledgement signal indicating that the moving picture decoding apparatus is unable to successfully receive the coded data of any of the predetermined number of consecutive pictures among the pictures; and a control unit configured to: when the acquisition unit receives the acknowledgement signal, store, as a picture for error recovery in the memory, a decoded picture of a current picture which is being coded at a time when the acquisition unit receives the acknowledgement signal; and when the acquisition unit receives the negative-acknowledgement signal, cause the coding unit to code the current picture with reference to a picture for error recovery stored in the memory.

When the acquisition unit receives an acknowledgement signal, the moving picture coding apparatus in this configuration can be notified that the moving picture decoding apparatus has successfully received a plurality of coded pictures in a period from the time of reception of the most recent acknowledgement signal to the time of the reception of the acknowledgement signal. Furthermore, when the moving picture decoding apparatus is unable to successfully receive a part of the pictures due to packet loss, only a frame for error recovery is used as a reference picture for coding a current frame. The moving picture coding apparatus is therefore not required to store all the frames in case of packet loss due to communication error, and thus requiring memory of a small capacity. It is therefore possible for the moving picture coding apparatus to send a stream of high compression efficiency with memory of a small capacity.

Furthermore, a moving picture decoding apparatus according to an aspect of the present invention receives, from a moving picture coding apparatus, a coded stream obtained by coding a moving picture using inter-prediction and includes: a decoding unit configured to decode the coded stream using inter-prediction with reference to previously decoded pictures; and a second control unit configured to: when coded data of all of a predetermined number of consecutive pictures included in the coded stream are successfully received, send an acknowledgement signal to the moving picture coding apparatus; when coded data of any picture included in the coded stream is unsuccessfully received, send a negative-acknowledgement signal; when sending the acknowledgement signal, store a decoded picture of a current picture in a memory; and when sending the negative-acknowledge signal, cause the decoding unit to decode the current picture with reference to a frame for error recovery stored in the memory.

The moving picture decoding apparatus is capable of notifying the moving picture coding apparatus of successful reception of a predetermined number of consecutive pictures by sending a single acknowledgement signal to the moving picture coding apparatus. Furthermore, when the moving picture decoding apparatus is unable to successfully receive the predetermined number of consecutive frames due to packet loss, only a frame for error recovery is used as a reference picture for coding a current frame by the moving picture coding apparatus. The moving picture decoding apparatus is therefore not required to store all the frames in case of packet loss due to communication error, and thus requiring memory of a small capacity. It is therefore possible for the moving picture decoding apparatus to receive a stream of high compression efficiency with memory of a small capacity.

Note that the present invention can be embodied not only as an apparatus but also as an integrated circuit including the processing units of these apparatuses, a method including the processing units of these apparatuses as steps, a program for causing a computer to execute the steps, and information, data or a signal indicating the program. The program, information, data and signal may be distributed via a recording medium such as a CD-ROM or a communication medium such as the Internet.

### [Advantageous Effects of Invention]

According to the present invention, a decoded picture of a current picture is stored in a memory as a picture for error recovery when an acknowledgement signal is received, and a current picture is coded with reference to one of pictures for error recovery stored in the memory when a negative-acknowledgement signal is received. This stops error propagation using a P-picture (inter prediction), which does not require memory of an increased capacity to store reference pictures. As a result, a stream of high compression efficiency can be generated using memory of a small capacity.

### [Brief Description of Drawings]

[FIG. 1] FIG. 1 illustrates a moving picture coding method using ACKs and NACKs and inter-coding which are used in the embodiments of the present invention.
[FIG. 2A] FIG. 2A is a block diagram illustrating an exemplary configuration of a moving picture coding apparatus according to Embodiment 1 of the present invention.
[FIG. 2B] FIG. 2B is a block diagram illustrating another exemplary configuration of the moving picture coding apparatus according to Embodiment 1 of the present invention.
[FIG. 3] FIG. 3 is a flowchart showing a procedure to be followed by the moving picture coding apparatus to process each frame according to Embodiment 1 of the present invention.
[FIG. 4A] FIG. 4A illustrates memory areas in a picture memory of the moving picture coding apparatus according to Embodiment 1 of the present invention.
[FIG. 4B] FIG. 4B is a schematic function diagram illustrating an exemplary moving picture transfer system according to the present invention.
[FIG. 5A] FIG. 5A is a block diagram illustrating an exemplary configuration of a moving picture decoding apparatus according to Embodiment 2 of the present invention.
[FIG. 5B] FIG. 5B is a block diagram illustrating another exemplary configuration of the moving picture decoding apparatus according to Embodiment 2 of the present invention.
[FIG. 6] FIG. 6 is a flowchart showing a procedure to be followed by the moving picture decoding apparatus to process each frame according to Embodiment 2 of the present invention.
[FIG. 7] FIG. 7 is a flowchart showing a procedure to be followed in a moving picture decoding method to process each frame according to Embodiment 3 of the present invention.
[FIG. 8] FIG. 8 is a flowchart showing a procedure to be followed in the moving picture decoding method to process each frame according to Embodiment 4 of the present invention.
[FIG. 9] FIG. 9 illustrates an example of packet fields for control.
[FIG. 10] FIG. 10 is a block diagram illustrating an exemplary configuration of a moving picture decoding apparatus according to Embodiment 4 of the present invention.
[FIG. 11] FIG. 11 is a block diagram illustrating another exemplary configuration of the moving picture decoding apparatus according to Embodiment 4 of the present invention.
[FIG. 12] FIG. 12 is a schematic function diagram illustrating another exemplary moving picture transfer system according to the present invention.
[FIG. 13] FIG. 13 is a flowchart showing a procedure to be followed in a moving picture decoding method to process each frame according to Embodiment 4 of the present invention.
[FIG. 14A] FIG. 14A illustrates ACK/NACK reception (the case of reception of ACK).
[FIG. 14B] FIG. 14B illustrates ACK/NACK reception (the case of reception of NACK).
[FIG. 14C] FIG. 14C illustrates ACK/NACK reception (the case of reception of an ACK and a NACK).
[FIG. 14D] FIG. 14D illustrates ACK/NACK reception (the case of timeout.
[FIG. 15] FIG. 15 illustrates a recording medium in which a program for implementation of a picture coding apparatus according to Embodiments 1 to 4 of the present invention using a computer system is stored.
[FIG. 16] FIG. 16 illustrates a conventional moving picture coding method using ACKs and NACKs and intra-coding.
[FIG. 17] FIG. 17 illustrates a conventional moving picture coding method using ACKs and inter-coding.
[FIG. 18] FIG. 18 illustrates a conventional moving picture coding method using NACKs and inter-coding.

### [Description of Embodiments]

The following embodiments are described to show preferable examples of the present invention. The numerical values, shapes, materials, structural elements, arrangement and connection of the structural elements, steps, the processing order of the steps, and others shown in the following embodiments are mere examples, and therefore do not limit the inventive concept. Therefore, among the constituent elements in the following embodiments, constituent elements not recited in any one of the independent claims defining the most generic part of the inventive concept are described as constituent elements constituting preferable embodiments.

Hereinafter, embodiments of the present invention shall be described with reference to drawings. The same constituent elements are denoted with the same reference sign, and description thereof may be omitted.

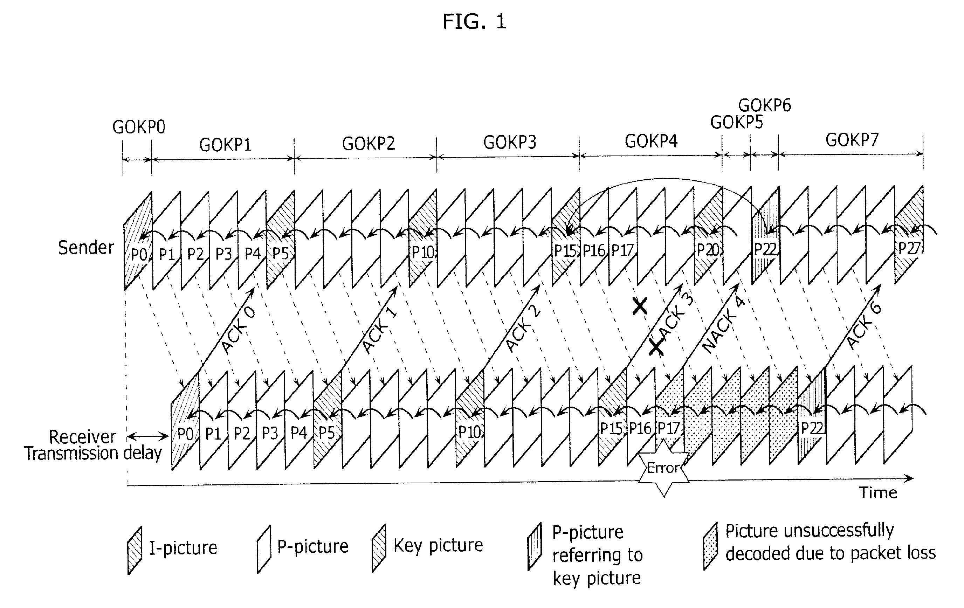

FIG. 1 illustrates a moving picture coding method using ACKs and NACKs and inter-coding which are used in the embodiments of the present invention. The process illustrated in FIG. 1 shall be described below.

For the embodiments of the present invention, a group of pictures between key pictures (GOKP) is defined. A GOKP is a set of pictures included in a moving picture. A key picture is at the end of each GOKP. The key picture is stored as a reference picture for error recovery and used for stopping propagation of error across inter-prediction pictures when an error occurs in a transmission path.

Each of the pictures included in a GOKP is an I-picture or a P-picture. An I-picture, which is an inter-prediction picture, is only one picture transmitted as the initial picture of a coded stream and solely forms a GOKP as the initial key picture of the coded stream. A P-picture is an inter-prediction picture which references a previously coded picture.

A receiver stores, as a reference picture in a picture memory, a picture decoded immediately before a picture to be decoded currently (hereinafter referred to as a current picture). In the memory, key pictures correctly decoded and reference pictures other than the key pictures are stored in different areas, and the memory always stores the most recent correctly decoded key picture and the most recent reference picture.

When the receiver can correctly decode all pictures in a received GOKP, the receiver sends a sender an acknowledgement signal (ACK) with a number for identifying the GOKP to which each of the pictures belongs. When the receiver is unable to correctly decode a picture, the receiver sends a negative-acknowledgement signal (NACK). The ACK and NACK are each provided with a number for identifying a GOKP.

When receiving an ACK, the sender codes, as a new key picture, a picture which has not been completely coded at the time of the receiving of the ACK, completes a GOKP including the picture, and then forms a new GOKP.

When no NACK is delivered, the sender codes a current picture (P-picture) with reference to the most recent reference picture strongly correlating with the current picture regardless of whether or not an ACK is delivered.

When receiving a NACK, the sender finishes coding of a current picture, and then ends a GOKP with the current picture. The sender then forms a new GOKP including only a single picture which is a subsequent picture to be coded and is a key picture, and codes the picture with reference to a key picture of a GOKP corresponding to the ACK most recently received.

Specifically, the sender shown in FIG. 1 is coding a picture P21 when the sender receives a NACK. The sender finishes the coding of the picture P21, and then ends GOKP5 to which the picture P21 belongs. Next, the sender forms a new GOKP, GOKP6 including only a picture P22 as a key picture. The sender has received an ACK 3, which is the most recent ACK before receiving a NACK 4. The sender then codes a picture P22 with reference to the key picture corresponding to the ACK 3, that is, a picture P15, which is the key picture of the GOKP3.

Note that as with the receiver, the sender stores key pictures and pictures other than the key pictures in different areas.

In this manner, even when the picture P17 is not correctly decoded due to a transmission error, the picture P22 can be decoded as a P-picture with reference to the picture P15 correctly decoded, so that error propagation is stopped.

The moving picture coding method using ACKs, NACKs, and inter-coding illustrated in FIG. 1 is performed by a moving picture coding apparatus and a moving picture decoding apparatus according to the present invention, and the configuration and operation of the moving picture coding apparatus and the moving picture decoding apparatus are specifically described in the following embodiments.

### [Embodiment 1]

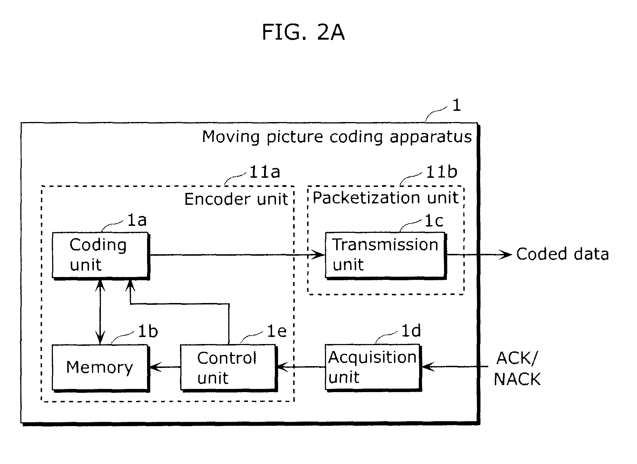

FIG. 2A is a block diagram illustrating an exemplary configuration of a moving picture coding apparatus 1 according to Embodiment 1 of the present invention. As illustrated in FIG. 2A, the moving picture coding apparatus 1 includes a coding unit 1a, a memory 1b, a transmission unit 1c, an acquisition unit 1d, and a control unit 1e.

The coding unit 1a performs compression-coding on moving picture data, and outputs resulting compression-coded moving picture data to the transmission unit 1c.

The memory 1b is a memory including areas to store reference pictures.

The transmission unit 1c adds header information for transmission (for example, an RTP header, an IP header) to the compression-coded moving picture data received from the coding unit 1a and generates coded data thereof, and transmits the coded data to a moving picture decoding apparatus.

The acquisition unit 1d receives an acknowledgement signal (ACK) or a negative-acknowledgement signal (NACK) from the moving picture decoding apparatus, and notifies the control unit 1e of the signal.

When the acquisition unit 1d receives an acknowledgement signal (ACK), the control unit 1e stores, as a picture for error recovery in the memory, a decoded picture of a current picture which is being coded at the time when the acquisition unit 1d receives the acknowledgement signal. When the acquisition unit 1d receives a negative-acknowledgement signal (NACK), the control unit 1e causes the coding unit 1a to code a current picture with reference to a picture for error recovery stored in the memory.

Note that the moving picture coding apparatus 1 may include an encoder unit 11a which includes the coding unit 1a, the memory 1b, and the control unit 1e. Optionally, the moving picture coding apparatus 1 may include a packetization unit 11b which includes the transmission unit 1c.

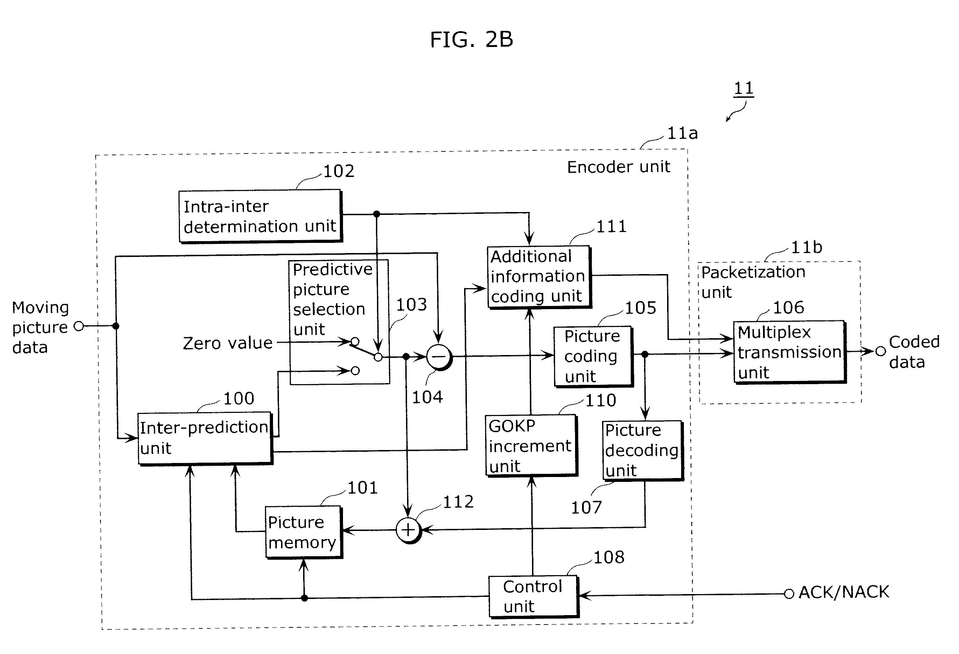

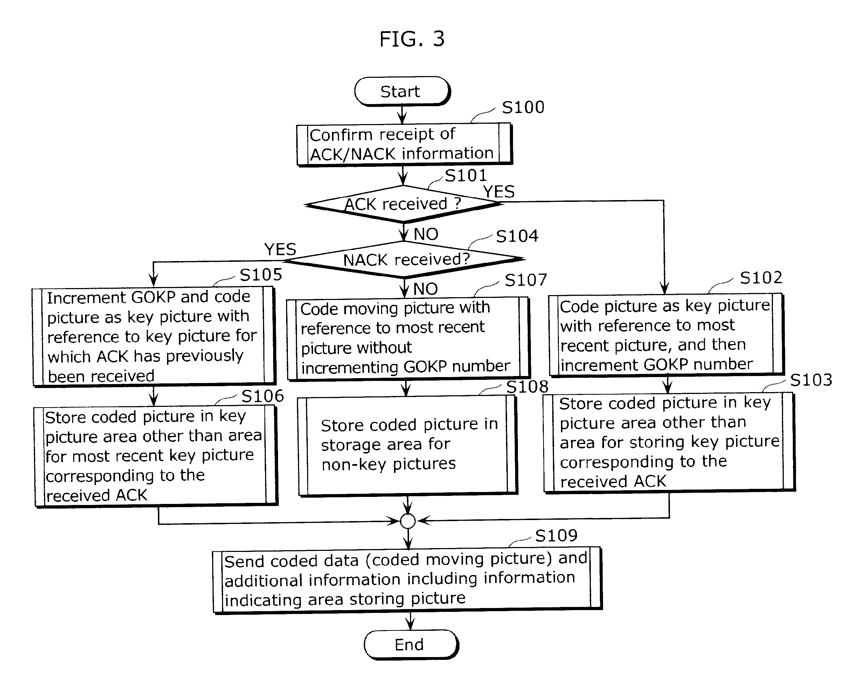

FIG. 2B is a block diagram illustrating an exemplary configuration of a moving picture coding apparatus 11 according to Embodiment 1 of the present invention. FIG. 3 is a flowchart showing a procedure to be followed by the moving picture coding apparatus 11 according to Embodiment 1 of the present invention. Operation of the moving picture coding apparatus 11 shown in FIG. 2B shall be described below with reference to FIG. 3.

As illustrated in FIG. 2B, the moving picture coding apparatus 11 according to Embodiment 1 includes an inter-prediction unit 100, a picture memory 101 an intra-inter determination unit 102, a predictive picture selection unit 103, a predictive picture subtractor unit 104, a picture coding unit 105, a multiplex transmission unit 106, a picture decoding unit 107, a control unit 10, a GOKP increment unit 110, an additional information coding unit 111, and a predictive picture adder unit 112. The inter-prediction unit 100, picture memory 101, intra-inter determination unit 102, predictive picture selection unit 103, predictive picture subtractor unit 104, image coding unit 105, picture decoding unit 107, control unit 108, GOKP increment unit 110, additional information coding unit 111, and predictive picture adder unit 112 correspond to the encoder unit 11a. The multiplex transmission unit 106 corresponds to the packetization unit 11b. Each of the blocks shall be described below in detail.

A moving picture is input as input moving picture data into an input terminal, and sent to the inter-prediction unit 100 and the predictive picture subtractor unit 104.

The picture memory 101 has areas for storing reference pictures including two key pictures.

The inter-prediction unit 100 generates predictive picture data with reference to reference picture data stored in the areas for storing reference pictures in the picture memory 101. The inter-prediction unit 100 also generates motion information, such as a motion vector, as additional information for inter-coding. The additional information is necessary for coding a picture as a P-picture. Then, the inter-prediction unit 100 notifies the additional information coding unit 111 of the resulting additional information.

The intra-inter determination unit 102 sends an intra-inter determination signal to instruct the predictive picture selection unit 103 to code the initial picture as an I-picture and the other pictures as P-pictures.

The predictive picture selection unit 103 follows an instruction indicated by the intra-inter determination signal. When a current picture to be coded is a P-picture, the predictive picture selection unit 103 inputs predictive picture data read out from the picture memory 101 by the inter-prediction unit 100 into the predictive picture subtractor unit 104. When a current picture to be coded is an I-picture, the predictive picture selection unit 103 selects and inputs "no input data" (a zero value) into the predictive picture subtractor unit 104. The predictive picture subtractor unit 104 calculates difference values between the moving picture data input through the input terminal and the predictive picture data selected by the predictive picture selection unit 103 to generate prediction error picture data. The image coding unit 105 performs compression-coding on the generated prediction error picture data and outputs the coded data resulting from the compression-coding to the multiplex transmission unit 106. The picture decoding unit 107 performs decompression-decoding on coded data to generate decoded prediction error picture data. The predictive picture adder unit 112 adds the decoded prediction error picture data generated by the picture decoding unit 107 and the predictive picture data selected by the predictive picture selection unit 103 to obtain decoded picture data, and outputs the decoded picture data to the picture memory 101.

The control unit 108 stores, in areas for storing reference pictures, the decoded image date input from the predictive picture adder unit 112 into the picture memory 101. The area in which each reference picture is stored is depending on whether or not the decoded current picture is a key picture. Then, the control unit 108 provides the inter-prediction unit 100 with information indicating the area storing decoded picture data of each picture as a part of reference picture indicating information.

The control unit 108 receives ACKs and NACKs on an ACK/NACK notification stream received by a receiving unit (not shown in the drawings) inside or outside of the moving picture coding apparatus (S100). When receiving an ACK (S101, YES), the control unit 108 notifies the additional information coding unit 111 of GOKP identification information to cause the GOKP increment unit 110 code a current picture as a key picture and the pictures subsequent to the current picture as pictures which belong to the next GOKP. Furthermore, the control unit 108 sends the picture memory 101, the inter-prediction unit 100, and the additional information coding unit 111 reference picture indicating information indicating that the most recent picture is to be used as a reference picture (S102). Note that a picture to be coded as a key picture may be a picture immediately after the picture currently being coded by the GOKP increment unit 110.

The additional information coding unit 111 is notified of, as a part of additional information to be used in inter-coding, the reference picture indicating information input in the inter-prediction unit 100. Furthermore, the control unit 108 stores the key picture in the picture memory 101 so that the key picture is stored in an area different from the area for a picture corresponding to a received ACK. In other words, the area to store the key picture is a storage area for a key picture for which no ACK has been received or a storage area for a key picture corresponding to an ACK older than the ACK which has just been received (S103).

When receiving a NACK (S104, YES), the control unit 108 causes the GOKP increment unit 110 to end the current GOKP with a picture which is the most recent one among the pictures which have been completely coded. Next, the control unit 108 causes the GOKP increment unit 110 to code the current picture as a key picture and forms a GOKP including only the key picture. Next, the control unit 108 calculates GOKP identification information and notifies the additional information coding unit 111 of the GOKP identification information to cause the GOKP increment unit 110 to code the pictures subsequent to the key picture as pictures which belong to the next GOKP.

Furthermore, the control unit 108 notifies the picture memory 101 of reference picture indicating information so that the key picture for which an ACK has been received most recently is to be used as reference picture data (S105).

The additional information coding unit 111 is notified of, as a part of additional information to be used in inter-coding, the reference picture indicating information input in the inter-prediction unit 100. Furthermore, the control unit 108 stores the key picture in the picture memory 101 so that the key picture is stored in an area different from the area for a picture corresponding to the most recent ACK. In other words, the area to store the key picture is a storage area for a key picture for which no ACK has been received or a storage area for a key picture corresponding to an ACK older than the most recent ACK (S106).

When receiving neither an ACK nor a NACK, (S104, NO), the GOKP increment unit 110 does not increment GOKP identification information, and notifies the additional information coding unit 111 and the control unit 108 of the GOKP identification information.

The control unit 108 notifies the picture memory 101 of reference picture indicating information so that the most recent reference picture (that is, a key picture or the most recent non-key picture) stored in the picture memory 101 is to be used as reference picture data (S107).

The additional information coding unit 111 is notified of, as a part of additional information to be used in inter-coding, the reference picture indicating information input in the inter-prediction unit 100. Furthermore, the picture is stored in an area of the picture memory 101 so that the area storing the picture is a storage area for reference pictures which are non-key pictures (S108).

The additional information coding unit 111 provides (i) an intra-inter determination signal indicating each frame as an I-frame or a P-frame, (ii) additional information indicating motion information to be used for inter-coding, generated by the inter-prediction unit 100, (iii) reference picture indicating information indicating a reference picture, and (iv) a GOKP number. The additional information coding unit 111 codes GOKP identification information indicating whether or not a current picture is coded as a key picture and (v) information indicating the storage area where picture data obtained by decoding the coded current picture is to be stored, and notifies the multiplex transmission unit 106 of the resulting coded information as additional information.

The multiplex transmission unit 106 multiplexes coded data and additional data into a coded stream to send to the moving picture decoding apparatus of a receiver (S109).

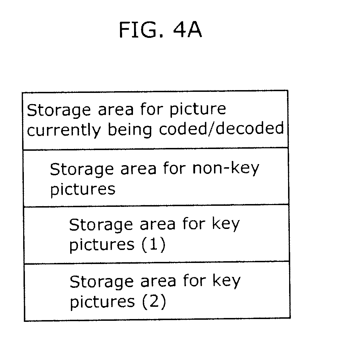

FIG. 4A illustrates memory areas in the picture memory included in the moving picture coding apparatus according to Embodiment 1. As illustrated in FIG. 4A, the picture memory 101 is divided into storage areas to store key pictures and pictures other than the key pictures separately.

A minimum required capacity of the picture memory 101 is equivalent to four pictures: one for a picture currently being coded or decoded, two for key pictures, and one for a non-key picture. The picture currently being coded or decoded is copied into one of the storage area for a non-key picture and the storage areas for key pictures when the coding or decoding of the picture is completed.

The storage area to store the picture currently being coded or decoded is used for coding or decoding of the next picture. As illustrated in FIG. 4A, the picture memory 101 has the storage areas for two key pictures so that the picture memory 101 can store a key picture corresponding to the most recent ACK and another key picture therein.

Instead of the copying of the picture currently being coded or decoded into one of the storage area for a non-key picture and the storage areas for key pictures, the addresses indicating the storage area of the picture memory 101 to store the picture currently being coded or decoded may be switched between the source and target of the copying when the coding or decoding of the picture is completed. This operation is equivalent to the copying.

Note that it is clear that the required capacity of the picture memory 101 according to the present invention is significantly small in comparison with the conventional moving picture coding method or the conventional moving picture decoding method, also in which a picture currently being coded or decoded needs to be stored.

According to Embodiment 1 as described above, the picture memory 101 has storage areas for two key pictures and one other picture (non-key picture) in addition to a storage area for one picture currently being coded or decoded. With the picture memory 101 of the capacity, it is possible to reduce the data amount of a coded stream and at the same time stop error propagation by coding pictures as P-pictures using inter-prediction. It is therefore possible to send a stream of high compression efficiency with memory of a small capacity.

Note that in the moving picture coding apparatus, the initial picture, with which sending of a coded stream is started, is coded using intra-prediction and sent as an I-picture, which is not shown in the flowchart in FIG. 3. Specifically, the predictive picture selection unit 103 selects a zero value for the initial picture in a coded stream according to an intra-inter determination signal. Then, the predictive picture subtractor unit 104 does not calculate prediction error picture data between picture data of the initial picture and predictive picture data. The image coding unit 105 codes the picture data input from the predictive picture subtractor unit 104 as an I-picture using intra-prediction, and sends the coded picture data to the multiplex transmission unit 106.

Note that sending a picture as an I-picture is not limited to the sending of an initial picture only, and more I-pictures may be inserted in a coded stream as appropriate. When the receiver is not unable to correctly decode the initial picture sent as an I-picture, that is, when the sender receives a NACK for the initial picture, the sender may code a picture which has not been completely coded when the NACK is received using intra-prediction and send the picture as another I-picture.

When a timeout expires without any ACK or NACK delivered from a moving picture decoding apparatus of the receiver, the control unit 108 may perform the same operation as the operation when a NACK is performed. The timeout is preferably set to be approximately twice as long as a transmission delay in a transmission path between the moving picture coding apparatus and the moving picture decoding apparatus. In this case, the control unit 108 may be configured to periodically measure the transmission delay and determine a timeout based on the measured delay. Optionally, the control unit 108 may measure the delay only once at the beginning of transmission of a coded stream and determine a timeout based on the measured delay. Optionally, a timeout of a certain length may be preliminarily determined based on statistics.

The present invention is not limited to the operation described in Embodiment 1, in which the sender codes GOKP identification information for identifying a GOKP including a current picture and includes the coded GOKP identification information, as information using which the sender specifies a key frame to the sender, in additional information of the current picture in a stream. For example, information indicating that a current picture is a key picture may be sent to the receiver separately from a coded stream.

A key picture need not be a picture immediately after a frame which is being coded at a time when an ACK or a NACK is received as described in Embodiment 1. For example, there may be such a setting that pictures with a fixed number of pictures therebetween are used as key pictures. Optionally, a key picture may be a picture one or two pictures later from the picture which is being coded at a time when an ACK or a NACK is received.

When there is such a setting that pictures with a fixed number of pictures or a fixed period of time therebetween are key pictures, the moving picture coding apparatus of the sender need not send the moving picture decoding apparatus of the receiver information for identifying key pictures.

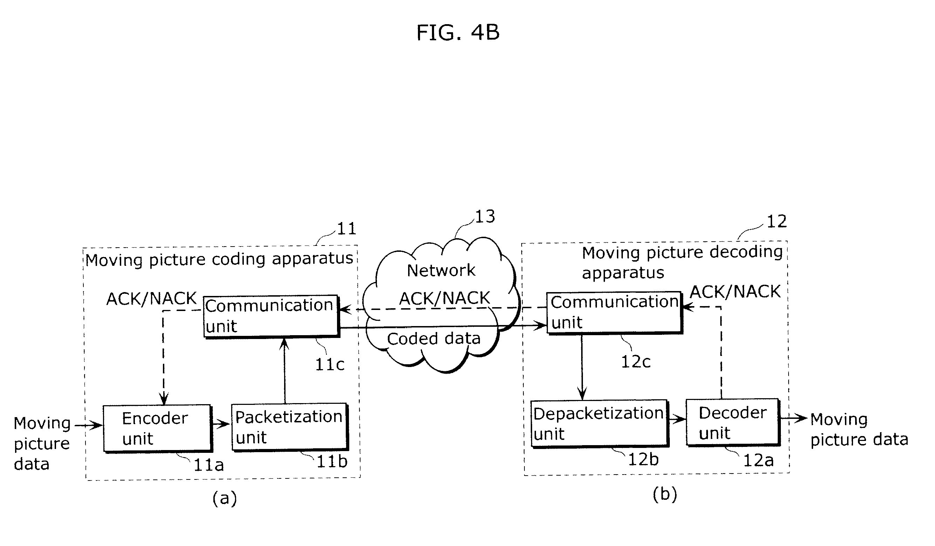

FIG. 4B is a schematic function diagram illustrating an exemplary moving picture transfer system including the moving picture coding apparatus according to the present invention. The moving picture coding apparatus 11 according to Embodiment 1 of the present invention is shown in (a) in FIG. 4B. The moving picture coding apparatus 11 includes the encoder unit 11a, the packetization unit 11b, and a communication unit 11c.

The communication unit 11c is connected to a network and has a logical connection with a moving picture decoding apparatus. The communication unit 11c adds information necessary for communication to packets output from the packetization unit 11b, and sends the packets addressed to the moving picture decoding apparatus to the network. The communication unit 11c also receives information regarding packet loss (ACK or NACK) from the moving picture decoding apparatus, and notifies the encoder unit 11a of the information. Note that the communication unit 1c may have logical connections with a plurality of moving picture coding apparatuses at the same time.

### [Embodiment 2]

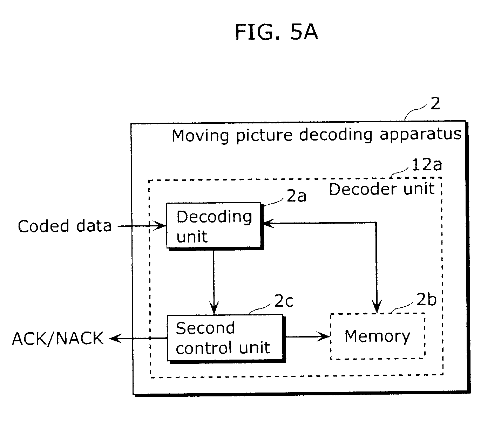

FIG. 5A is a block diagram illustrating an exemplary configuration of a moving picture decoding apparatus 2 according to Embodiment 2 of the present invention. As illustrated in FIG. 5A, the moving picture decoding apparatus 2 includes a decoding unit 2a and a second control unit 2c. The moving picture decoding apparatus 2 may further include a memory 2b.

The decoding unit 2a performs inter-prediction decoding on a coded stream received by the moving picture decoding apparatus.

The memory 2b is a memory including area to store reference pictures.

When the moving picture decoding apparatus successfully receives coded data up to a key picture, the second control unit 2c notifies the sender of an acknowledgement signal (ACK). When the moving picture decoding apparatus is unable to successfully receive coded data in any part, the second control unit 2c notifies the sender of a negative-acknowledgement signal (NACK). Furthermore, the second control unit 2c acquires information indicating a picture to reference in coding using inter-prediction in the coded data, and reads out the decoded picture data indicated by the information from pictures stored in the memory so that the decoded picture data can be used as reference picture data. A current picture is decoded with reference to the reference picture data by the decoding unit 2a.

Note that the moving picture decoding apparatus 2 may include a decoder unit 12a which includes the decoding unit 2a, the memory 2b, and the second control unit 2c.

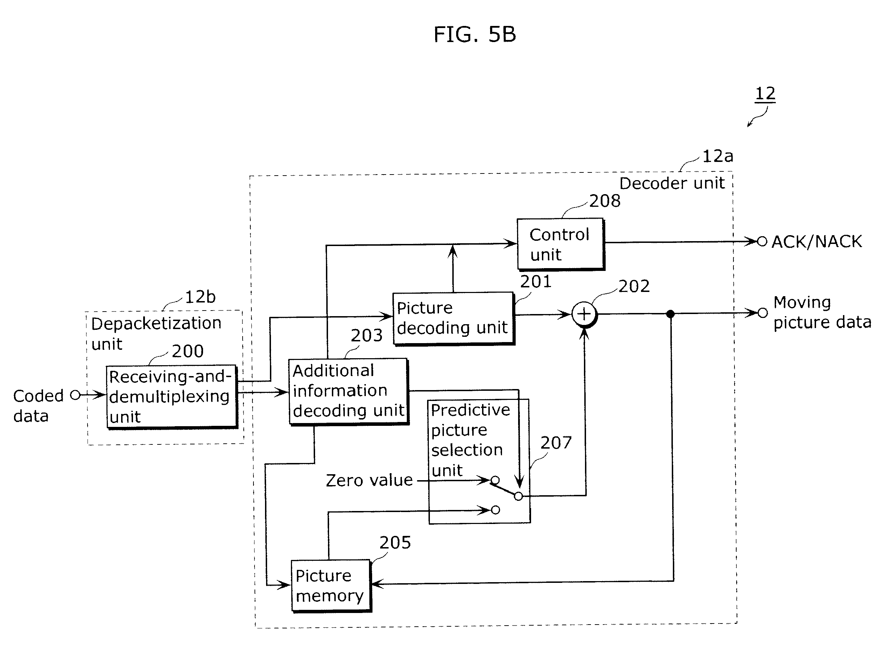

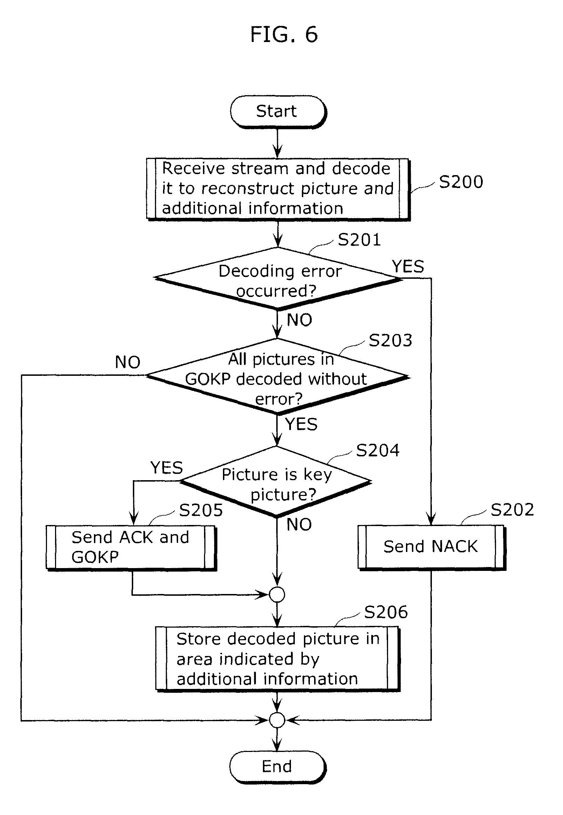

FIG. 5B is a block diagram illustrating a configuration of a moving picture decoding apparatus 12 according to Embodiment 2 of the present invention. FIG. 6 is a flowchart showing a procedure to be followed in the moving picture decoding method to process each frame according to Embodiment 2 of the present invention. Operation of the moving picture decoding apparatus 12 shown in FIG. 5B shall be described below with reference to FIG. 6.

As illustrated in FIG. 5B, the moving picture decoding apparatus 12 according to Embodiment 1 includes a receiving-and-demultiplexing unit 200, a picture decoding unit 201, a predictive picture adder unit 202, an additional information decoding unit 203, a picture memory 205, a predictive picture selection unit 207, and a control unit 208.

A stream input through an input term in at is demultiplexed into coded data of prediction error picture data and coded data of additional information by the receiving-and-demultiplexing unit 200.

The additional information decoding unit 203 takes, from coded data of additional information for inter-prediction coding, coded data of reference picture indicating information, coded data of information indicating a memory area storing decoded picture data, coded data of an intra-inter determination signal, and coded data of GOKP identification information.

The control unit 208 reads out a reference picture indicated by the reference picture indicating information from the picture memory 205 to use the reference picture as reference picture data, and generates predictive picture data with reference to the reference picture data based on the additional information for inter-coding including motion information. The predictive picture selection unit 207, according to the intra-inter determination signal, inputs predictive picture data into the predictive picture adder unit 202 when a current picture is a P-picture, and selects and inputs "no input data" (a zero value) into the predictive picture adder unit 202 when a current picture is an I-picture.

The picture decoding unit 201 decodes coded prediction error picture data demultiplexed by the receiving-and-demultiplexing unit 200 and outputs the decoded prediction error picture data to the predictive picture adder unit 202. The predictive picture adder unit 202 outputs the sum of the decoded prediction error picture data obtained by the picture decoding unit 201 and the predictive picture data input from the predictive picture selection unit 207 as decoded picture data (S200). When the picture decoding unit 201 is unable to decode any picture in decoding of coded prediction error picture data input from the receiving-and-demultiplexing unit 200 due to transmission error or the like, the picture decoding unit 201 notifies
the control unit 208 of occurrence of a decode error by sending an error notification signal indicating the occurrence of the decode error.

When the error-notification signal indicates occurrence of a decode error of a current picture (S201, YES), the control unit 208 sends an ACK/NACK notification stream indicating a NACK to a moving picture coding apparatus of the sender (S202), and ends processing of the current picture.

When the error-notification signal indicates that the current picture is successfully decoded (S201, NO), the control unit 208 further determines whether or not all the pictures in the GOKP including the current picture have been successfully decoded (S203). When it is determined in Step S203 that all the pictures in the GOKP have been successfully decoded (S203, YES), the control unit 208 further determines whether or not the current picture which has just been decoded is a key picture (the picture at the end of the GOKP) (S204). When it is determined that the current picture is a key picture (S204, YES), the control unit 208 sends the sender an ACK to which GOKP identification information for the current picture is attached (S205). Optionally, the following operation may be performed instead. When a current picture is decoded with no decode error (S201, NO), a GOKP normal reception determination unit 208 determines whether or not the current picture is a key picture (the picture at the end of a GOKP) (S203, YES). When it is determined that the current picture is a key picture and all the pictures in the GOKP have been decoded without error (S204, YES), an ACK/NACK transmission unit U209 notifies the sender of an ACK/NACK notification stream S214 indicating an ACK to which GOKP number information S211 is attached.

When it is determined in Step S203 that there is no decode error in the GOKP including the current picture (S203, YES), and the current picture is not a key picture (S204, NO), the control unit 208 sends nothing. Next, the control unit 208 stores decoded picture data of the current picture output from the predictive picture adder unit 202 in a storage area in the picture memory 205 indicated by additional information (5206) so that the decoded picture data can be referred to in subsequent decoding (S206), and ends processing of the current picture.

When an error occurs in any of the pictures in the GOKP including the current picture, the control unit 208 ends processing of the current picture without storing decoded picture data in the picture memory 205. As a result, since decoded picture data of the picture for which an error has occurred is not stored in the picture memory 205, decoded picture data of a picture preceding the picture with the error is kept stored in the picture memory 205, and the decoded picture of the picture preceding the picture with the error keeps being displayed.

In the moving picture decoding apparatus according to Embodiment 2, a coded picture is decoded with a reference to the same picture as the picture referred to for the coding of the coded picture in the moving picture coding apparatus according to Embodiment 1. Therefore, when the picture memory 205 includes storage areas for two key pictures and a storage area for one non-key picture in addition to a storage area for one picture which is currently being decoded, and error propagation can be stopped across pictures coded as P-pictures (using inter-prediction). Accordingly, the moving picture decoding apparatus can receive a stream of high compression efficiency with memory of a small capacity.

Note that in Embodiment 2, the control unit 208 may send an ACK when all the pictures in a GOKP are successfully received instead of when all the pictures in a GOKP are successfully decoded as described above. For example, packets by which a coded stream is transferred are provided with packet numbers according to the order of the pictures in the coded stream. The moving picture decoding apparatus of the receiver can use the packet numbers to check whether or not all pictures have been received. Specifically, the moving picture decoding apparatus stores the packets received for a certain period of time in a buffer, and sorts the packets in the order of the packet number to check whether or not all pictures have been delivered by checking for any skipped packet number. In this operation, a NACK can be sent before decoding a coded stream when there is a missing packet in a GOKP. It is therefore possible to recover from a transmission error more quickly.

The moving picture decoding apparatus 12 according to Embodiment 2 of the present invention is shown in (b) in FIG. 4B. The moving picture decoding apparatus 12 includes the decoder unit 12a, a depacketization unit 12b, and the communication unit 12c.

The communication unit 12c is connected to a network and has a logical connection with a moving picture coding apparatus. The communication unit 12c receives packets including compression-coded moving picture data through the network, removes information necessary for communication, and outputs the compression-coded moving picture data to the depacketization unit 12b. Upon receiving information regarding packet loss (ACK or NACK), the communication unit 12c notifies the moving picture coding apparatus of the information.

### [Embodiment 3]

The moving picture decoding apparatus according to Embodiment 2 does not store in the picture memory 205 a picture which the moving picture decoding apparatus is unable to decode. This is because storing decoded data of a picture for display in the picture memory 205 is useless when the picture which cannot be correctly decoded is not to be displayed.

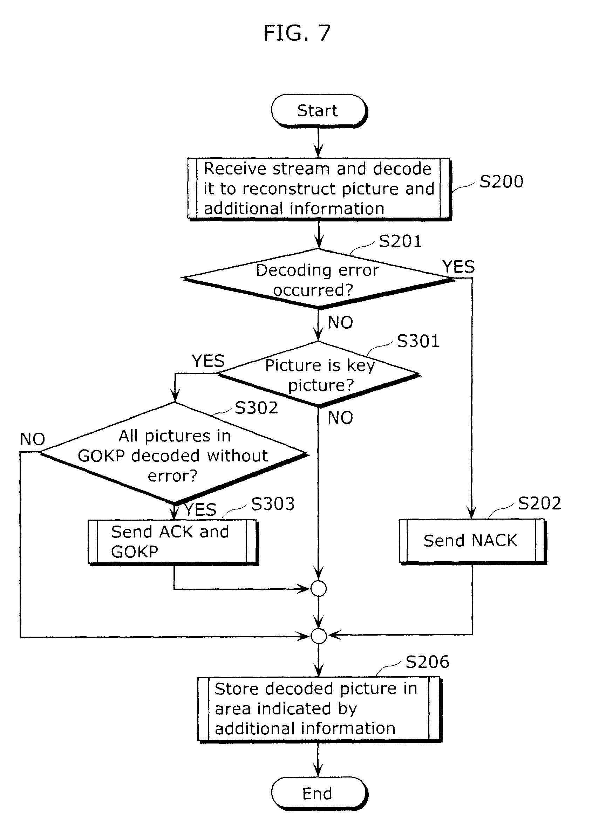

However, if it is desired, for a reason of the configuration of a moving picture decoding apparatus, to store all pictures in a picture memory to display picture data which the moving picture decoding apparatus is unable to dececode as well, the picture which the moving picture decoding apparatus is unable to decode may be also stored in the picture memory as illustrated in FIG. 7. When the decoded picture is displayed, the part not correctly decoded is not displayed correctly, but the other part may be displayed correctly. The operation is thus effective when it is desired to have as many decoded pictures as possible displayed in any part.

FIG. 7 is a flowchart showing a procedure to be followed in a moving picture decoding method to process each frame according to Embodiment 3 of the present invention. Description of steps also in FIG. 6 is omitted for FIG. 7.

When an error-notification signal indicates in the process in Step S201 in FIG. 7 that the current picture is correctly decoded (S201, NO), the control unit 208 further determines whether or not the current picture which has just been decoded is a key picture (a picture at the end of a GOKP) (S301). When it is determined that the current picture is a key picture (S301, YES), the control unit 208 further determines whether or not all the pictures in the GOKP including the current picture have been correctly decoded (S303).

When it is determined in Step S203 that all the pictures in the GOKP have been correctly decoded (S302, YES), the control unit 208 sends a sender an ACK with GOKP identification information of the picture currently coded attached thereto using an ACK/NACK notification stream (S303), and then stores decoded picture data of the current picture in an area of the picture memory 205 indicated by the additional information (S206), and ends processing of the current picture.

When an error occurs in any of the pictures in the GOKP, the control unit 208 skips the process in Step S303, stores decoded picture data of the current picture in an area of the picture memory 205 indicated by the additional information (S206), and ends processing of the current picture.

When the error-notification signal indicates in Step S201 that a decode error has occurred in the current picture, in Step S202, the control unit 208 sends a sender a NACK using an ACK/NACK notification stream, and then stores decoded picture data of the current picture in an area of the picture memory 205 indicated by the additional information (S206) and ends processing of the current picture.

### [Embodiment 4]

In Embodiment 4 of the present invention, exemplary operations shall be described in which an ACK or a NACK is sent to a moving picture coding apparatus when the communication unit of a moving picture decoding apparatus detects a packet loss. Specifically, the following describes detection of a packet loss, sending of an ACK or a NACK, and information included in the ACK or the NACK.

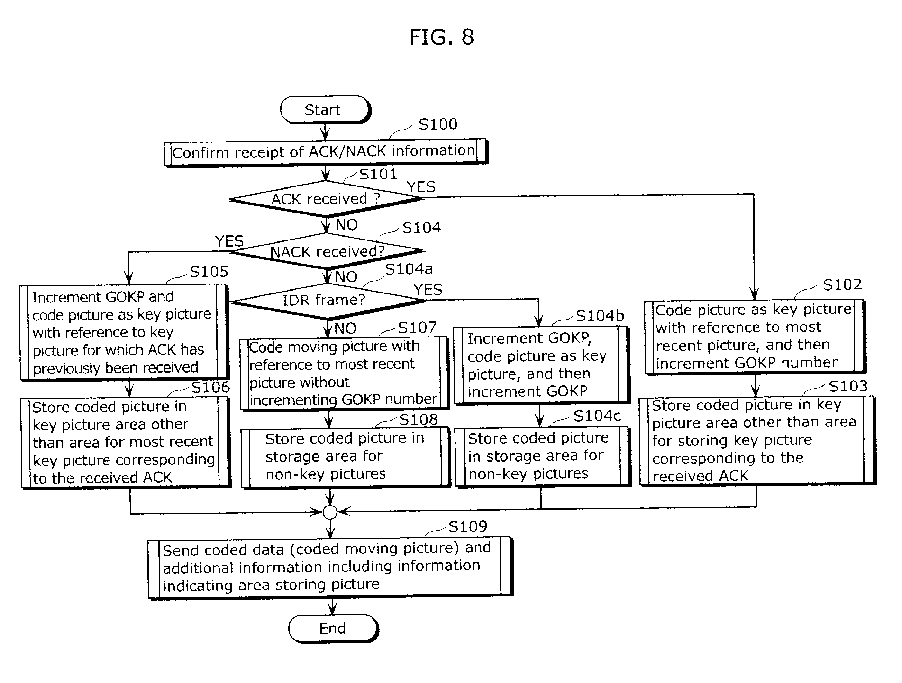

FIG. 8 is a flowchart showing a procedure of processing performed by a moving picture coding apparatus 15 according to Embodiment 4 of the present invention. The following describes differences in operation between the moving picture coding apparatus 15 and the moving picture coding apparatus 11. The moving picture coding apparatus 15 is different from the moving picture coding apparatus 11 in that the moving picture coding apparatus 15 determines whether or not a current picture to be coded is an I-picture and performs a predetermined process when the current picture is determined to be an I-picture. The differences shall be described below in detail.

The control unit 108 determines whether the control unit 108 has received an ACK or a NACK (S101 and S104), and then determines whether or not a current picture to be coded is an I-picture (S104a).

When it is determined that the current picture to be coded is an I-picture (S104a, YES), the control unit 108 proceeds to the subsequent GOKP and codes the I-picture as a key picture. Then, the control unit 108 proceeds to the further subsequent GOKP (S104b).

Next, the control unit 108 stores the coded image in a storage area for a key picture (S104c). Next, the control unit 108 performs the process in Step 109 as in the case of the moving picture coding apparatus 11.

When it is determined that the current picture to be coded is not an I-picture (S104a, NO), the control unit 108 performs the processes in Step S107 and Step S108 as in the case of the moving picture coding apparatus 11.

In this manner, when a current picture to be coded is an I-picture, the control unit 108 ends a GOKP with a picture immediately before the I-picture, forms a new GOKP including only the I-picture, and then further forms a new subsequent GOKP.

The control unit 108 thus proceeds to the subsequent GOKP when an I-picture is coded, a NACK is received, or an ACK is received. The above-described operation is summarized in Table 1 below.

**[Table 1]**

| Condition | Process |
|---|---|
| I-picture is coded | The current GOKP is ended and a new GOKP including only an I-picture is formed. (The picture at the end of the GOKP immediately before the I-picture is a key picture only when the GOKP is ended before the I-picture.) |
| NACK is received | The current GOKP is ended and a new GOKP including only a key picture is formed. (The picture at the end of the GOKP immediately before receiving an NACK is a key picture only when the picture being coded at the time when the NACK is received is a key picture.) |
| ACK is received | A key picture is coded and a GOKP is ended with the key picture. A new GOKP is started with the next picture. |

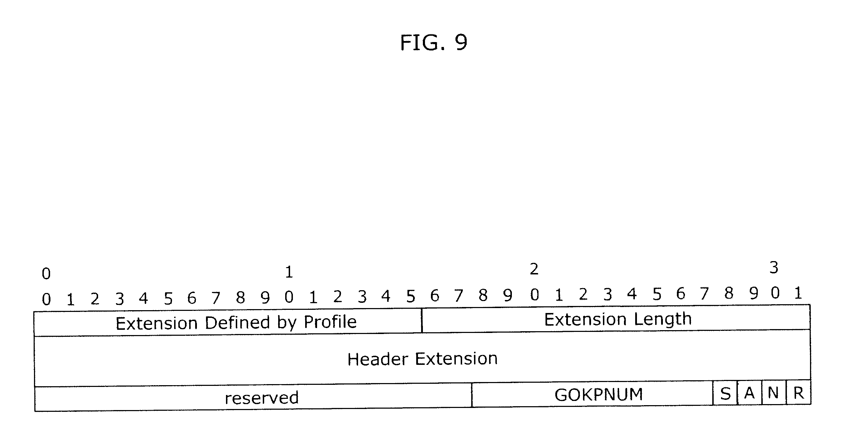

FIG. 9 illustrates an example of packet fields for control included in a compression-coded moving picture data transmitted from the communication unit 15c of the moving picture coding apparatus 15. Table 2 describes the packet fields in FIG. 9. The phrase "for each picture" in Table 2 means that when a picture is packetized into packets, the field is described in each of the packets of the picture.

Note that the packet fields may be described in any position in a communication packet. For example, the packet fields may be described in an extended field in an RTP packet.

**[Table 2]**

| Field | Number of bits | Description | Setting value |
|---|---|---|---|
| GOKPNUM | 10 | A GOKP number. Incremented by one for each new GOKP. 10-bit cycle. The value is fixed for each picture. | 0 to 2¹⁰ - 1 |
| S (Start) | 1 | 1 for the initial packet of a GOKP. 0 for the other packets. | 0 or 1 |
| A (ACK enabled) | 1 | 1 for a picture for which return of an ACK is requested, and 0 for otherwise. The value is fixed for each picture. | 0 or 1 |
| N (NACK enabled) | 1 | 1 for a picture for which return of a NACK is requested, and 0 for otherwise. The value is fixed for each picture. For example, 1 for an I-picture or a P-picture, and 0 for a B picture. | 0 or 1 |
| R (Refresh) | 1 | 1 for a picture with which error recovery is done, and 0 for otherwise. The value is fixed for each picture. For example, 1 for an I-picture or a recovery picture by LongTerm reference. | 0 or 1 |

A moving picture decoding apparatus 3 according to Embodiment 4 of the present invention shall be described below.

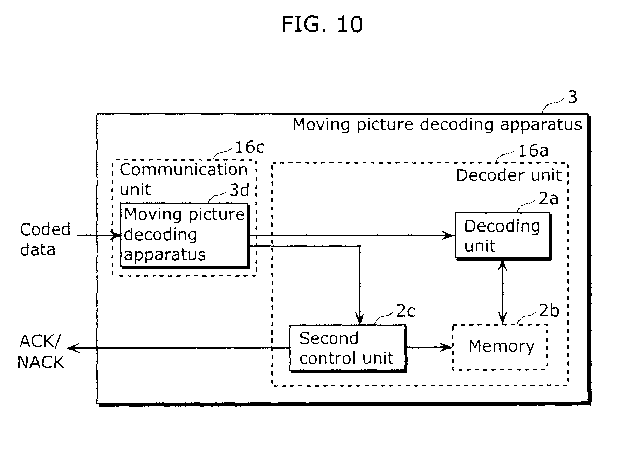

FIG. 10 is a block diagram illustrating an exemplary configuration of the moving picture decoding apparatus 3 according to Embodiment 4 of the present invention. As illustrated in FIG. 10, the moving picture decoding apparatus 3 includes a decoding unit 2a, a memory 2b, a second control unit 2c, and a receiving unit 3d.

Each of the decoding unit 2a, memory 2b, and second control unit 2c is the same as the corresponding one in the moving picture decoding apparatus 2.

The receiving unit 3d receives coded data sent from a moving picture coding apparatus.

Note that the moving picture decoding apparatus 3 may include a decoder unit 12a which includes the decoding unit 2a, the memory 2b, and the second control unit 2c. Optionally, the moving picture decoding apparatus 3 may include a communication unit 16c which includes the receiving unit 3d.

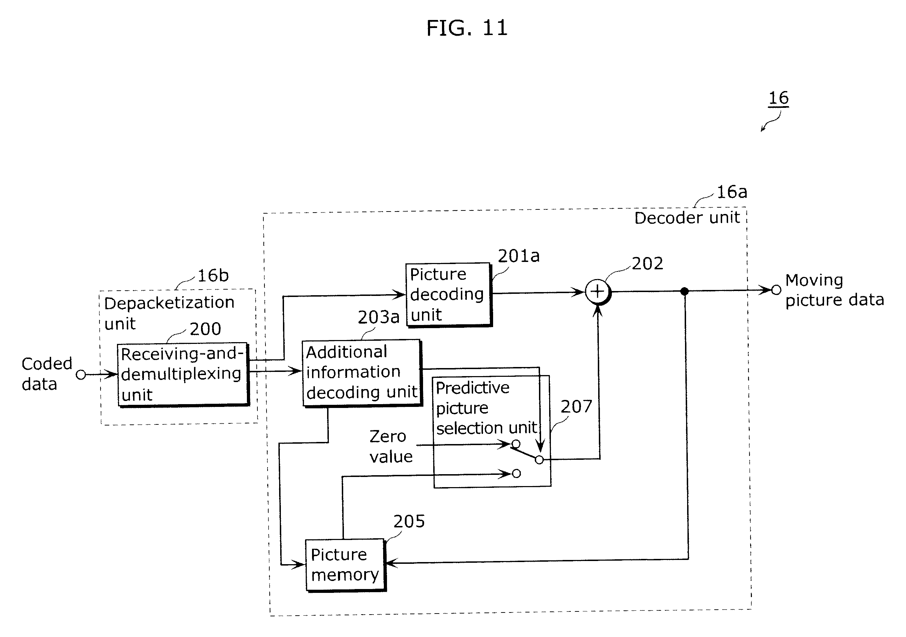

FIG. 11 is a block diagram illustrating an exemplary configuration of the moving picture decoding apparatus 3 according to Embodiment 4 of the present invention. As illustrated in FIG. 11, the moving picture decoding apparatus 3 according to Embodiment 4 includes a receiving and demultiplexing unit 200, a picture decoding unit 201, a predictive picture adder unit 202, an additional information decoding unit 203, a picture memory 205, and a predictive picture selection unit 207. The moving picture decoding apparatus 3 is different from the moving picture decoding apparatus 2 in Embodiment 2 in that the moving picture decoding apparatus 3 does not include a control unit.

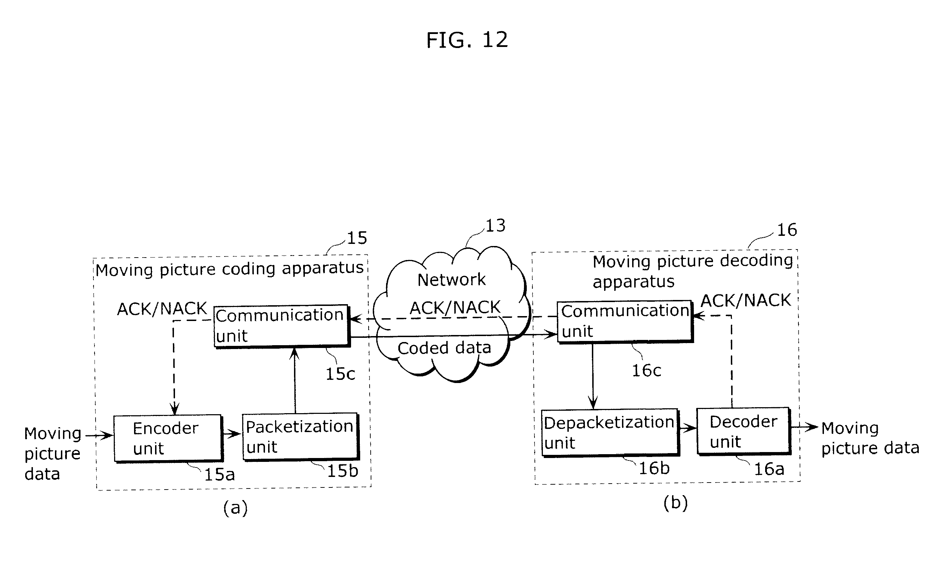

As illustrated in FIG. 12, the moving picture decoding apparatus 16 according to Embodiment 4 includes the receiving-and-demultiplexing unit 200, a picture decoding unit 201a, the predictive picture adder unit 202, the additional information decoding unit 203a, the picture memory 205, and a predictive picture selection unit 207.

The picture decoding unit 201a decodes coded prediction error picture data demultiplexed by the receiving-and-demultiplexing unit 200 and outputs the decoded prediction error picture data to the predictive picture adder unit 202.

The additional information decoding unit 203a takes, from coded data of additional information for inter-prediction coding, coded data of reference picture indicating information, coded data of information indicating a memory area for storing decoded picture data, coded data of an intra-inter determination signal, and coded data of GOKP identification information.

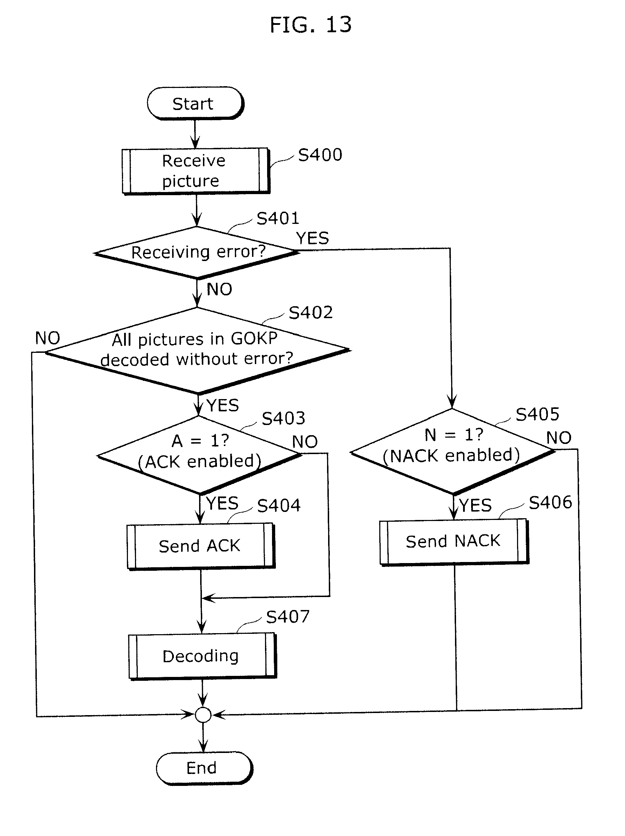

FIG. 13 is a flowchart showing a procedure to be followed by the moving picture decoding apparatus 3 to process each picture according to Embodiment 4 of the present invention.

First, the receiving unit 3d receives coded data (S400).

Next, the receiving unit 3d determines whether or not the received coded data includes any receiving error due to packet loss (S401).

When it is determined in Step S401 that the received coded data includes no receiving error (S401, NO), the receiving unit 3d determines whether or not all the pictures in a GOKP include no error (S402). When it is determined in Step S402 that all the pictures includes no error (S402, YES), the receiving unit 3d refers to a packet field for control in the received coded data most recently to determine whether or not A = 1 (ACK enabled) (S403). When it is determined that A = 1 (S403, YES), the receiving unit 3d sends an ACK to the moving picture coding apparatus (S404). Subsequently, the coded data is decoded (S407). The decoding is performed in the same manner as in the moving picture decoding apparatus 12 according to Embodiment 2, and the description thereof is omitted.

When it is determined in Step S401 that the received coded data includes a receiving error (S401, YES), the receiving unit 3d refers to a packet field for control in other coded data of the frame including the receiving error to determine whether or not N = 1 (S405). When it is determined that N = 1 (NACK enabled) (S405, YES), the receiving unit 3d sends a NACK to the moving picture coding apparatus (S406).

Table 3 describes examples of fields in a packet of ACK/NACK. Each ACK/NACK packet includes at least a bit indicating either ACK or NACK and GOKPNUM.

**[Table 3]**

| Field | Number of bits | Description | Setting value |
|---|---|---|---|
| ACK/NACK | 1 | Indicates whether the message is ACK or NACK. | 0 or 1 |
| GOKPNUM | 10 | A GOKP number. Incremented by one for each new GOKP. 16-bit cycle. | 0 to 2¹⁰ - 1 |

FIG. 12 is a schematic function diagram illustrating an exemplary moving picture transfer system including the moving picture coding apparatus and the moving picture decoding apparatus according to Embodiment 4. The moving picture coding apparatus 15 shown in (a) in FIG. 12 is the same as the moving picture coding apparatus 11 according to Embodiment 1. The moving picture decoding apparatus 16 shown in (b) in FIG. 12 includes a decoder unit 16d, a depacketization unit 16b, and a communication unit 16e.

The communication unit 16c receives packets including compression-coded moving picture data through a network, demultiplexes the packet into information used for communication control and the outputs the compression-coded moving picture data, and outputs the compression-coded moving picture data to the depacketization unit 16b. Furthermore, the communication unit 16c detects the presence of an error in receiving of a packet, and sends the moving picture coding apparatus information indicating whether or not the packet has been successfully received (ACK or NACK).

The depacketization unit 16b is the same as the depacketization unit 12b of the moving picture decoding apparatus 12.

The decoder unit 16d decodes compression-coded moving picture data output from the depacketization unit 16b to restore the moving picture data.

The foregoing has described the details of the operation of the moving picture coding apparatus and the moving picture decoding apparatus according to Embodiment 4. The following further describes operation of the moving picture coding apparatus and the moving picture decoding apparatus, and the operation is also within in the scope of the present invention.

The moving picture coding apparatus may have a predetermined length of interval between receiving an ACK and sending a picture for which return of an ACK is requested. This will prevent transmission of a large amount of ACKs even when the round-trip time between the moving picture coding apparatus and the moving picture decoding apparatus is short. In the case the round-trip time between the moving picture coding apparatus and the moving picture decoding apparatus is short, and the moving picture coding apparatus sends, upon receiving an ACK, a picture for which return of an ACK is requested, the moving picture decoding apparatus sends an ACK immediately after the sending. This causes exchange of a large amount of ACKs and pictures for which return of an ACK is requested.

The moving picture coding apparatus may assume that a NACK is received when neither an ACK nor a NACK is received within a predetermined time after sending a key picture, and perform the process accordingly. Receiving no ACK indicates that the moving picture decoding apparatus has not received a predetermined number of consecutive pictures or that an ACK sent from the moving picture decoding apparatus after receiving a predetermined number of consecutive pictures is lost due to packet loss. In either case, packet loss has occurred, and the assumption that a NACK is received is therefore appropriate.

When the moving picture coding apparatus has logical connections with a plurality of moving picture decoding apparatuses via a network, the receiving of an ACK and a NACK and the determinations may be performed using the following method.

When the moving picture coding apparatus has connections with a plurality of moving picture coding apparatuses, the moving picture coding apparatus assumes that the moving picture coding apparatus has received an ACK or a NACK in the manner as follows.

(1) The moving picture coding apparatus assumes that the moving picture coding apparatus has received an ACK when the moving picture coding apparatus receives ACKs from all the moving picture coding apparatuses.

(2) The moving picture coding apparatus assumes that the moving picture coding apparatus has received a NACK when the moving picture coding apparatus receives a NACK from at least one of the moving picture coding apparatuses.

(3) The moving picture coding apparatus assumes that the moving picture coding apparatus has received a NACK when the moving picture coding apparatus receives an ACK from any of the moving picture coding apparatuses and nothing from the other moving picture coding apparatuses (timeout).

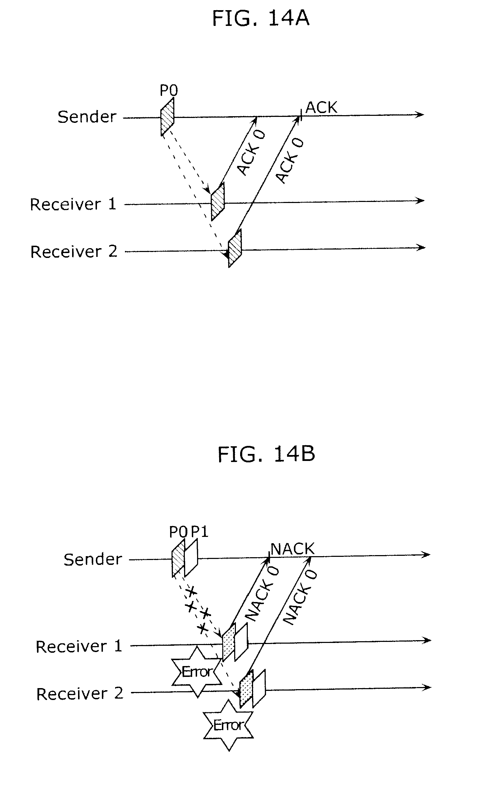

FIG. 14A illustrates ACK/NACK reception (the case of reception of ACKs). FIG. 14A illustrates a case of a configuration including one moving picture coding apparatus ("Sender" in FIG. 14A) and two moving picture decoding apparatuses ("Receiver 1" and "Receiver 2" in FIG. 14A). FIG. 14A illustrates a sequence of sending a picture P0 from the sender to the receiver 1 and the receiver 2 and sending a response from the receiver 1 and the receiver 2 in turn.

When receiving an ACK sent from each of the receiver 1 and the receiver 2 which have received the picture P0, the sender assumes that the sender has received an ACK as illustrated in FIG. 14A (the case of (1)).

FIG. 14B illustrates ACK/NACK reception (the case of reception of NACKs). When receiving a NACK sent from each of the receiver 1 and the receiver 2 which have not received the picture P0, the sender assumes that the sender has received a NACK as illustrated in FIG. 14B (the case of (2)).

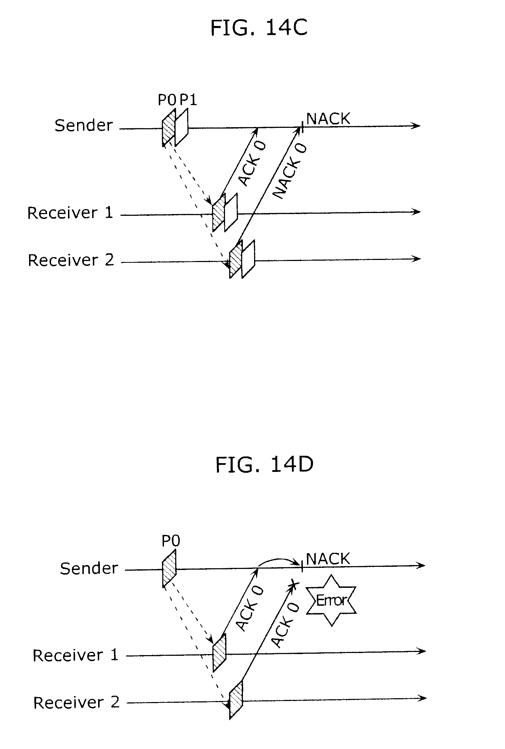

FIG. 14C illustrates ACK/NACK reception (the case of reception of an ACK and a NACK). When receiving an ACK sent from the receiver 1 which has received a picture P0 and a NACK sent from the receiver 2 without receiving the picture P0,the sender assumes that the sender has received a NACK upon receiving the NACK as illustrated in FIG. 14C (the case of (2)).

FIG. 14D illustrates ACK/NACK reception (the case of timeout). When receiving an ACK sent from the receiver 1 which has received the picture P0,and receiving, for some reason, neither an ACK nor a NACK from the receiver 2 which has not received the picture P0, the sender assumes that the sender has received a NACK after a predetermined length of interval after receiving the ACK as illustrated in FIG. 14D (the case of (3)).

This method of communication with the plurality of moving picture decoding apparatuses is applicable to a plurality of one-to-one communications and one-to-many communications (with specified moving picture decoding apparatuses). This allows the moving picture coding apparatus to perform the operations in Embodiments 1 to 4 in communications with a plurality of moving picture coding apparatuses.

### [Embodiment 5]

Embodiment 5 shall be described below.

In Embodiment 5, a program for performing the moving picture coding method and the moving picture decoding method described in Embodiments 1 to 4 is recorded on a recording medium such as a flexible disk so that an independent computer system can easily perform the processes described in Embodiments 1 to 4.

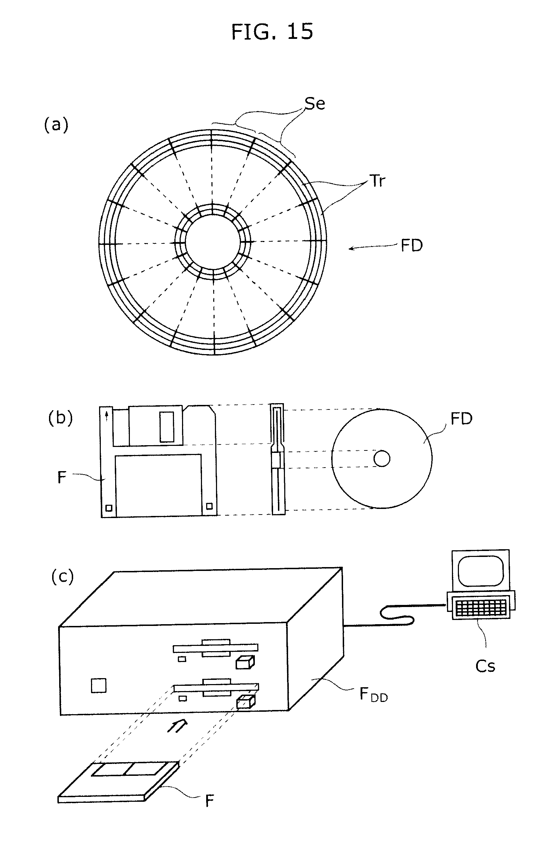

FIG. 15 illustrates a case where a computer system is caused to perform the moving picture coding method and the moving picture decoding method according to Embodiments 1 to 4 using a program recorded on a recording medium such as a flexible disk.

(b) in FIG. 15 illustrates a front view and a cross-sectional view of the flexible disk, and a flexible disk body. (a) in FIG. 15 shows an example of a physical format of the flexible disk body as a recording medium body. The flexible disk body FD contained in a case F has a surface where a plurality of tracks Tr is formed concentrically from the outermost circumference toward the innermost circumference. Each of the tracks is radially divided into 16 sectors Se. In the flexible disk storing the program, the program is recorded in the sectors assigned on the flexible disk body FD.

(c) in FIG. 15 shows a configuration for recording and reproducing the program on the flexible disk body FD. The program which provides the moving picture coding apparatus and the moving picture decoding apparatus is written on the flexible disk body FD from a computer system Cs via a flexible disk drive. In order to install the moving picture coding apparatus and the moving picture decoding apparatus in a computer system using the program stored in the flexible disk, the program is read from the flexible disk using the flexible disk drive and transferred to the computer system.

Although a flexible disk is used as a storage medium in the above description, an optical disk may be used instead as a data storage medium in the same manner. Furthermore, the storage medium is not limited to the flexible disk. Any medium, such as an integrated circuit (IC) card and a read-only-memory (ROM) cassette, may be employed instead also in the same manner as long as the program can be recorded thereon.

Each of the functional blocks of the moving picture coding apparatus and the moving picture decoding apparatus is typically implemented as a large-scale integration (LSI) circuit, which is an integrated circuit. These functional blocks may be individually implemented a single chips, or some or all of the functional blocks may be collectively implemented as a single chip. For example, all the functional blocks other than memory may be integrated into a single chip. The integrated circuit described as an LSI above may be referred to as an IC, a system LSI, a super LSI or an ultra LSI depending on its degree of integration.

The method of forming integrated circuitry is not limited to use of an LSI. Dedicated circuitry or a general-purpose processor may be used instead of an LSI. Also applicable are a field programmable gate array (FPGA), which allows post-manufacture programming, and a reconfigurable processor LSI, which allows post-manufacture reconfiguration of connection and setting of circuit cells therein.

Furthermore, in the event that an advance in or derivation from semiconductor technology brings about an integrated circuitry technology whereby an LSI is replaced, functional blocks may be obviously integrated using such new technology. The adaptation of biotechnology or the like is possible. Among the functional blocks, only a unit for storing data to be processed by the moving picture coding apparatus and the moving picture decoding apparatus may be excluded from implementation as a single chip and configured otherwise.

The present invention is not limited to Embodiments 1 to 5 based on which the moving picture coding apparatus or the moving picture decoding apparatus according to the present invention has been described as above. Those skilled in the art will readily appreciate that modifications of the exemplary embodiments or embodiments in which some of the constituent elements of the exemplary embodiments are combined are possible without materially departing from the novel teachings and advantages of the present invention. All such modifications and embodiments are also within the scope of the present invention.

### [Industrial Applicability]

The present invention is applicable to moving picture coding apparatuses and moving picture decoding apparatuses, and particularly to two-way video communication through a network. The present invention is applicable also to communication apparatuses and set apparatuses, such as an apparatus for video distribution and a surveillance camera, which code videos and send or receive the coded video.

### reference Signs List]

- 1, 11, 15: Moving picture coding apparatus
- 1a: Coding unit
- 1b: Memory
- 1c: Transmission unit
- 1d: Acquisition unit
- 1e: Control unit
- 2, 3, 12, 16: Moving picture decoding apparatus
- 2a: Decoding unit
- 2b: Memory
- 2c: Second control unit
- 11a: Encoder unit
- 11b: Packetization unit
- 11c, 12c, 16c: Communication unit
- 12a, 16a: Decoder unit
- 12b, 16b: Depacketization unit
- 13: Network
- 100: Inter-prediction unit
- 101, 205: Picture memory
- 102: Intra-inter determination unit
- 103, 207: Predictive picture selection unit
- 104: Predictive picture subtractor unit
- 105: Image coding unit
- 106: Transmission unit
- 107, 201, 201a: Picture decoding unit
- 108, 208: Control unit
- 110: GOKP increment unit
- 111: Additional information coding unit
- 112, 202: Predictive picture adder unit
- 200: Receiving-and-demultiplexing unit
- 203, 203a: Additional information decoding unit

## Claims

1. A moving picture coding apparatus comprising:
a coding unit configured to code pictures with reference to decoded pictures of previously coded pictures to generate coded data of the pictures;
a memory having areas for storing the decoded pictures of the previously coded pictures;
a transmission unit configured to transmit the generated coded data to a moving picture decoding apparatus;
an acquisition unit configured to receive either an acknowledgement signal or a negative-acknowledgement signal from the moving picture decoding apparatus, the acknowledgement signal indicating that the moving picture decoding apparatus has successfully received the coded data of all of a predetermined number of consecutive pictures among the pictures, and the negative-acknowledgement signal indicating that the moving picture decoding apparatus is unable to successfully receive the coded data of any of the predetermined number of consecutive pictures among the pictures; and
a control unit configured to:
when the acquisition unit receives the acknowledgement signal, store, as a picture for error recovery in the memory, a decoded picture of a current picture which is being coded at a time when the acquisition unit receives the acknowledgement signal; and
when the acquisition unit receives the negative-acknowledgement signal, cause the coding unit to code the current picture with reference to a picture for error recovery stored in the memory.

2. The moving picture coding apparatus according to Claim 1,
wherein when the current picture coded by the coding unit is an I-picture, the control unit is configured to store a decoded picture of the I-picture as a picture for error recovery in the memory.

3. The moving picture coding apparatus according to Claim 1,
wherein the coding unit is configured to code each of the pictures using inter-prediction with reference to a decoded picture of a coded picture stored in the memory, and
the control unit is configured to:
(i) when the acquisition unit receives an acknowledgement signal, (a) code the current picture using inter-prediction with reference to the decoded picture stored in the memory and store a decoded picture of the current picture as a new picture for error recovery in the memory, (b) form the predetermined number of consecutive pictures into a group and include, in a coded stream, identification information in association with the new picture for error recovery, and (c) proceed to a subsequent group and subsequent identification information, the identification information being information for identifying the group to which the new picture for error recovery belongs;
(ii) when the acquisition unit receives a negative-acknowledgement signal, (a) proceed to a subsequent group and subsequent identification information, (b) code the current picture using inter-prediction with reference to a picture for error recovery stored in the memory and corresponding to a most recent acknowledgement signal previously received, and store a decoded picture of the current picture as a new picture for error recovery in the memory, (c) include, in a coded stream, identification information in association with the new picture for error recovery, and (d) further proceed to a subsequent group and subsequent identification information, the identification information being information for indentifying the group to which the new picture for error recovery belongs; and
(iii) when the acquisition unit receives neither an acknowledgement signal nor a negative-acknowledgement signal, (a) code the current picture using inter-prediction with reference to a decoded picture stored in the memory, and (b) store a decoded picture of the coded current picture in the memory.

4. The moving picture coding apparatus according to Claim 3,
wherein the control unit is configured to form, into the group, pictures coded in a period of time from when the transmission unit stores a decoded picture of a picture for error recovery in the memory to when the acquisition unit receives a signal sent back from the moving picture decoding apparatus in response to the picture for error recovery, and include the identification information for identifying the group in a coded stream.

5. The moving picture coding apparatus according to Claim 1,
wherein the memory has two dedicated areas for storage of two pictures for error recovery, and
when the acquisition unit receives the acknowledgement signal, the control unit is configured to update one of the dedicated areas which stores a picture for error recovery older than a picture for error recovery stored in the other dedicated area, by overwriting the older picture for error recovery with the new picture for error recovery.

6. The moving picture coding apparatus according to Claim 5,
wherein when the acquisition unit receives neither the negative-acknowledgement signal nor the acknowledgement signal, the control unit is configured to cause the coding unit to code the current picture with reference to a decoded picture of a coded picture immediately before the current picture, and
store a decoded picture of the current picture in an area in the memory other than the dedicated areas.

7. The moving picture coding apparatus according to Claim 1,
wherein the control unit is configured to add, to coded data of a current picture coded as a picture for error recovery, information indicating that the current picture is a picture for error recovery.

8. The moving picture coding apparatus according to Claim 3,
wherein the control unit is configured to add, to coded data of a current picture coded as a picture for error recovery, group identification information as information indicating that the current picture is a picture for error recovery, the group identification information being information for identifying the group to which the current picture belongs.

9. The moving picture coding apparatus according to Claim 1,
wherein when the acquisition unit receives the acknowledgement signal, the control unit is configured to transmit coded data including a signal for requesting the moving picture decoding apparatus to send back a new acknowledgement signal.

10. The moving picture coding apparatus according to Claim 1,
wherein the control unit is configured to transmit coded data including a signal for requesting the moving picture decoding apparatus to send back a negative-acknowledgement signal when the moving picture decoding apparatus is unable to receive any piece of coded data corresponding to the predetermined number of the consecutive pictures.

11. The moving picture coding apparatus according to one of Claim 9 and Claim 10,
wherein the control unit is configured to include the signal in a real-time transport protocol (RTP) extended header and transmit coded data including the RTP extended header to the moving picture decoding apparatus.

12. The moving picture coding apparatus according to Claim 1,
wherein the moving picture coding apparatus transmits the coded data to a plurality of moving picture decoding apparatuses which are collectively a destination of a moving picture, and
the control unit is configured to:
when the acquisition unit receives acknowledgement signals from all of the moving picture decoding apparatuses, determine that the destination of the moving picture has successfully received the coded data of the predetermined number of the consecutive pictures, and store, as a picture for error recovery, the decoded picture of the current picture which is being coded at a time of the receiving of the signals; and
when the acquisition unit receives a negative-acknowledgement signal from at least one of the moving picture decoding apparatuses, determine that the destination of the moving picture is unable to successfully receive the coded data of the predetermined number of the consecutive pictures, and cause the coding unit to code the current picture with reference to a picture for error recovery stored in the memory.

13. The moving picture coding apparatus according to any one of Claims 1 to 8,
wherein the control unit is configured to cause the coding unit to code an initial picture in the coded stream using intra-prediction coding, and is configured to store a decoded picture of the initial picture coded using intra-prediction as an initial picture for error recovery in the memory.

14. The moving picture coding apparatus according to Claim 13,
wherein when the acquisition unit receives a negative-acknowledgement signal for the initial picture for error recovery, the control unit is configured to cause the coding unit to code the current picture using intra-prediction, and is configured to store a decoded picture of the current picture as a new picture for error recovery in the memory.

15. The moving picture coding apparatus according to Claim 1,
wherein the coding unit is configured to code each of the pictures using inter-prediction with reference to a decoded picture of a previously coded picture stored in the memory, and
the control unit is configured to:
(i) when the acquisition unit receives an acknowledgement signal, (a) code the current picture using inter-prediction with reference to the decoded picture stored in the memory and store a decoded picture of the current picture as a new picture for error recovery in the memory, (b) form the predetermined number of consecutive pictures into a group and include, in a coded stream, identification information in association with the new picture for error recovery, and (c) proceed to a subsequent group and subsequent identification information, the identification information being information for identifying the group to which the new picture for error recovery belongs;
(ii) when the acquisition unit receives a negative-acknowledgement signal, (a) proceed to a subsequent group and subsequent identification information, (b) code the current picture using inter-prediction with reference to a picture for error recovery stored in the memory and corresponding to a most recent acknowledgement signal previously received, and store a decoded picture of the current picture as a new picture for error recovery in the memory, (c) include, in a coded stream, identification information in association with the new picture for error recovery, and (d) further proceed to a subsequent group and subsequent identification information, the identification information being information for indentifying the group to which the new picture for error recovery belongs;
(iii) when the current picture coded by the coding unit is an I-picture, (a) proceed to a subsequent group and subsequent identification information, (b) store the I-picture in the memory as a new picture for error recovery, (c) include, in a coded stream, identification information in association with the new picture for error recovery, and (d) further proceed to a subsequent group and subsequent identification information, the identification information being information for indentifying the group to which the new picture for error recovery belongs; and
(iv) when the acquisition unit receives neither an acknowledgement signal nor a negative-acknowledgement signal, and the current picture coded by the coding unit is not an I-picture, (a) code the current picture using inter-prediction with reference to a decoded picture stored in the memory, and (b) store a decoded picture of the coded current picture in the memory.

16. A moving picture decoding apparatus which receives, from a moving picture coding apparatus, a coded stream obtained by coding a moving picture using inter-prediction, the moving picture decoding apparatus comprising:
a decoding unit configured to decode the coded stream using inter-prediction with reference to previously decoded pictures; and
a second control unit configured to:
when coded data of all of a predetermined number of consecutive pictures included in the coded stream are successfully received, send an acknowledgement signal to the moving picture coding apparatus;
when coded data of any picture included in the coded stream is unsuccessfully received, send a negative-acknowledgement signal;
when sending the acknowledgement signal, store a decoded picture of a current picture in a memory; and
when sending the negative-acknowledge signal, cause the decoding unit to decode the current picture with reference to a frame for error recovery stored in the memory.

17. The moving picture decoding apparatus according to Claim 16,
wherein the second control unit is configured to send the acknowledgement signal after successfully decoding all of the predetermined number of consecutive pictures.

18. The moving picture decoding apparatus according to one of Claims 16 and 17,
wherein when sending the negative-acknowledgement signal, the second control unit is configured to cause the decoding unit to decode a current picture with reference to a most recent picture for error recovery decoded before the unsuccessful receiving of coded data of a picture and stored in the memory, the current picture being subsequent to the picture for which the second control unit has sent the negative-acknowledgement signal.

19. The moving picture decoding apparatus according to Claim 16, further comprising:
a receiving unit configured to receive coded data transmitted from a moving picture coding apparatus,
wherein the second control unit is configured to
send an acknowledgement signal to the moving picture coding apparatus when the receiving unit has successfully received coded data of a predetermined number of consecutive pictures included in the coded stream, the coded data received by the receiving unit includes a signal for requesting the moving picture decoding apparatus to send back a new acknowledgement signal, and no negative-acknowledgement signal has been sent by the second control unit for pictures preceding the predetermined number of the consecutive pictures.

20. The moving picture decoding apparatus according to Claim 19,
wherein the second control unit is configured to send the moving picture coding apparatus a negative-acknowledgement signal when the receiving unit is unable to successfully receive coded data of any picture included in the coded stream, and the coded data received by the receiving unit includes a signal for requesting the moving picture decoding apparatus to send back a negative-acknowledgement signal.

21. A moving picture coding method comprising:
coding pictures with reference to decoded pictures of previously coded pictures to generate coded data of the pictures, the coding being performed by a coding unit;
transmitting the generated coded data to a moving picture decoding apparatus, the transmitting being performed by a transmission unit;
receiving either an acknowledgement signal or a negative-acknowledgement signal from the moving picture decoding apparatus, the receiving being performed by an acquisition unit, the acknowledgement signal indicating that the moving picture decoding apparatus has successfully received the coded data of all of a predetermined number of consecutive pictures among the pictures, and the negative-acknowledgement signal indicating that the moving picture decoding apparatus is unable to successfully receive the coded data of any of the predetermined number of consecutive pictures among the pictures; and
storing a decoded picture of a current picture as a picture for error recovery in the memory when the acquisition unit receives the acknowledgement signal, and causing the coding unit to code the current picture with reference to a picture for error recovery stored in the memory when the acquisition unit receives the negative-acknowledgement signal, the storing and the causing being performed by a control unit.

22. A moving picture decoding method in which a coded stream obtained by coding a moving picture using inter-prediction is received from a moving picture coding apparatus, the method comprising:
decoding the coded stream using inter-prediction with reference to previously decoded pictures, the decoding being performed by a decoding unit,
sending an acknowledgement signal to the moving picture coding apparatus when all of a predetermined number of consecutive pictures included in the coded stream are successfully received, and sending a negative-acknowledgement signal when any picture included in the coded stream is unsuccessfully received, the sending of an acknowledgement signal and the sending of a negative-acknowledgement signal being performed by a second control unit;
storing a decoded picture of a current picture in a memory when the second control unit sends the acknowledgement signal, and causing the decoding unit to decode the current picture with reference to a picture for error recovery stored in the memory when the second control unit sends the negative-acknowledgement signal, the storing and the causing being performed by the second control unit.

23. A computer-readable recording medium on which a program for a moving picture coding apparatus is recorded, the program causing a computer to execute:
coding pictures with reference to decoded pictures of previously coded pictures to generate coded data of the pictures, the coding being performed by a coding unit;
transmitting the generated coded data to a moving picture decoding apparatus, the transmitting being performed by a transmission unit;
receiving either an acknowledgement signal or a negative-acknowledgement signal from the moving picture decoding apparatus, the receiving being performed by an acquisition unit, the acknowledgement signal indicating that the moving picture decoding apparatus has successfully received the coded data of all of a predetermined number of consecutive pictures among the pictures, and the negative-acknowledgement signal indicating that the moving picture decoding apparatus is unable to successfully receive the coded data of any of the predetermined number of consecutive pictures among the pictures; and
storing a decoded picture of a current picture as a picture for error recovery in the memory when the acquisition unit receives the acknowledgement signal, and causing the coding unit to code the current picture with reference to a picture for error recovery stored in the memory when the acquisition unit receives the negative-acknowledgement signal, the storing and the causing being performed by a control unit.

24. A computer-readable recording medium on which a program for a moving picture decoding apparatus which receives, from a moving picture coding apparatus, a coded stream obtained by coding a moving picture using inter-prediction is recorded, the program causing a computer to execute:
decoding the coded stream using inter-prediction with reference to previously decoded pictures, the decoding being performed by a decoding unit,
sending an acknowledgement signal to the moving picture coding apparatus when all of a predetermined number of consecutive pictures included in the coded stream are successfully received, and sending a negative-acknowledgement signal when any picture included in the coded stream is unsuccessfully received, the sending of an acknowledgement signal and the sending of a negative-acknowledgement signal being performed by a second control unit;
storing a decoded picture of a current picture in a memory when the second control unit sends the acknowledgement signal, and causing the decoding unit to decode the current picture with reference to a picture for error recovery stored in the memory when the second control unit sends the negative-acknowledgement signal, the storing and the causing being performed by the second control unit.

25. An integrated circuit on which a moving picture coding apparatus is mounted, the integrated circuit comprising:
a coding unit configured to code pictures with reference to decoded pictures of previously coded pictures to generate coded data of the pictures;
a memory having areas for storing the decoded pictures of the previously coded pictures;
a transmission unit configured to transmit the generated coded data to a moving picture decoding apparatus;
an acquisition unit configured to receive either an acknowledgement signal or a negative-acknowledgement signal from the moving picture decoding apparatus, the acknowledgement signal indicating that the moving picture decoding apparatus has successfully received the coded data of all of a predetermined number of consecutive pictures among the pictures, and the negative-acknowledgement signal indicating that the moving picture decoding apparatus is unable to successfully receive any piece of the coded data; and
a control unit configured to:
when the acquisition unit receives the acknowledgement signal, store, as a picture for error recovery in the memory, a decoded picture of a current picture; and
when the acquisition unit receives the negative-acknowledgement signal, cause the coding unit to code the current picture with reference to a picture for error recovery stored in the memory.

26. An integrated circuit on which a moving picture decoding apparatus that receives, from a moving picture coding apparatus, a coded stream obtained by coding a moving picture using inter-prediction is mounted, the integrated circuit comprising:
a decoding unit configured to decode the coded stream using inter-prediction with reference to previously decoded pictures, and
a second control unit configured to:
when coded data of all of a predetermined number of consecutive pictures included in the coded stream are successfully received, send an acknowledgement signal to the moving picture coding apparatus;
when coded data of any picture included in the coded stream is unsuccessfully received, send a negative-acknowledgement signal;
when sending the acknowledgement signal, store a decoded picture of a current picture in a memory; and
when sending the negative-acknowledge signal, cause the decoding unit to decode the current picture with reference to a frame for error recovery stored in the memory.
